# EUROPEAN PATENT SPECIFICATION

(11) **EP 4 174 291 B1**
(45) Date of publication and mention of the grant of the patent: **29.05.2024**
(21) Application number: 22203877.0
(22) Date of filing: 26.10.2022
(51) Int. Cl.: F01N 1/00, F01N 1/08, F01N 3/10, F01N 3/28, F01N 13/02, F01N 13/14, F01N 13/18

(54) **SCOOTER TYPE VEHICLE**
MOTORROLLERARTIGES FAHRZEUG
VÉHICULE DU TYPE SCOOTER

(30) Priority: 26.10.2021 JP 2021174628
(43) Date of publication of application: 03.05.2023
(73) Proprietor: Yamaha Hatsudoki Kabushiki Kaisha, Iwata-shi, Shizuoka 438-8501 (JP)
(72) Inventor: TAKANO, Yoshihide, Iwata-shi, 4388501 (JP); SUOMA, Mitsuharu, Hamamatsu-shi, 431-3124 (JP)
(74) Representative: Studio Torta S.p.A.

(56) References cited:
- EP-A1- 1 703 099
- EP-A1- 2 050 937
- EP-A1- 3 779 138
- EP-B1- 3 321 486
- DE-T2- 60 114 335
- JP-A- 2016 160 914

## Description

The present invention relates to a scooter type vehicle.

Japanese Unexamined Patent Publication No. 2020-122392A discloses a two-wheeled motor vehicle. Hereinunder, numerals in Japanese Unexamined Patent Publication No. 2020-122392A are expressed in parentheses. A two-wheeled motor vehicle (11) is classified into a scooter type vehicle. The two-wheeled motor vehicle (11) includes a front exhaust pipe (41), a catalyst (45), a rear exhaust pipe (46), and a silencer (47). The catalyst (45) has a front end and a rear end. The front end of the catalyst (45) is connected to the front exhaust pipe (41). The catalyst (45) extends rearward from the front exhaust pipe (41). The rear exhaust pipe (46) is connected to the rear end of the catalyst (45). The rear exhaust pipe (46) extends rearward from the catalyst (45). The silencer (47) is connected to the rear exhaust pipe (46).

In Japanese Unexamined Patent Publication No. 2020-122392A, the catalyst (45) extends rearward from the front exhaust pipe (41). The catalyst (45) extends in a longitudinal direction. Accordingly, the catalyst (45) is elongated in the longitudinal direction. In Japanese Unexamined Patent Publication No. 2020-122392A, the front end of the catalyst (45) is connected to the front exhaust pipe (41). The rear end of the catalyst (45) is connected to the rear exhaust pipe (46). The rear end of the catalyst (45) supports the rear exhaust pipe (46). Accordingly, the catalyst (45) is easily bent. Consequently, the catalyst (45) needs an excessively high strength to support the rear exhaust pipe (46). As a result, the catalyst (45) may have difficulty in supporting the rear exhaust pipe (46) rigidly.

In Japanese Unexamined Patent Publication No. 2020-122392A, the catalyst (45) extends rearward from the front exhaust pipe (41). The rear exhaust pipe (46) extends rearward from the catalyst (45). Accordingly, the entire of the catalyst (45) and the rear exhaust pipe (46) may be excessively large. Specifically, the entire of the catalyst (45) and the rear exhaust pipe (46) may be excessively elongated in the longitudinal direction. As a result, it may be difficult to make the entire of the catalyst (45), the rear exhaust pipe (46), and the silencer (47) compact.

EP-A-3779138 discloses a scooter type vehicle according to the preamble of claim 1.

EP-A-1703099 discloses an exhaust gas purifying apparatus, in particular for a motorcycle, comprising an exhaust pipe connectable to an engine, a catalyst arranged in the exhaust pipe, a secondary air supply pipe connected to the exhaust pipe on an upstream side of a position, in which the catalyst is arranged, and a muffler that accommodates an end of the exhaust pipe, through which exhaust gases are discharged, and a connection between the secondary air supply pipe and the exhaust pipe, wherein the muffler is further constructed such that the exhaust gases discharged from said end of the exhaust pipe are prevented from being jetted directly toward the secondary air supply pipe.

JP-A-2016160914 discloses an exhaust system having a muffler connected to a downstream side of an exhaust pipe, a catalyst for purifying exhaust gas is provided in the exhaust pipe, and an oxygen sensor is mounted to a piping section located on the downstream side of the catalyst and directly connected to the catalyst. The oxygen sensor is provided approximately vertically in the axial direction of the piping section in which exhaust gas flows. The oxygen sensor includes a detection section. The detection section is disposed in a recessed portion formed in the muffler, and wiring is disposed outside the recessed portion.

DE-T-60114335 discloses an exhaust silencer in which relative elongation of an inner cylinder to an outer cylinder is permitted, and assembling workability is enhanced. An exhaust silencer has a structure in which relative elongation of an inner cylinder to an outer cylinder is permitted by blocking a rear end portion of the outer cylinder with a stepped disc, by slidably mounting a rear end portion of the inner cylinder on a step portion of the stepped disc. A fuse portion is provided at the rear end portion of the inner cylinder, and is welded to the step portion of the stepped disc to track temporarily the stepped disc to the inner cylinder at a temporary assembly stage. The fuse portion is constituted to be fractured by thermal expansion of the inner cylinder when exhaust gas flows.

EP-B-3321486 discloses a straddled vehicle with an upstream expansion chamber and a downstream expansion chamber provided in an outer pipe. An exhaust pipe extends to the upstream expansion chamber through the downstream expansion chamber. An inner pipe leads an exhaust gas from the upstream expansion chamber to the downstream expansion chamber. An inner pipe allows an exhaust gas to pass through the upstream expansion chamber from the downstream expansion chamber and be led to the outside of the outer pipe. In a vehicle side view, the inner pipes are respectively arranged at a position further downward than the exhaust pipe and a position further upward than the exhaust pipe. The outer pipe is provided to incline such that a rear end is higher than a front end, and inclines to pass through a position further upward than an axle of a rear wheel. In a cross section orthogonal to a direction in which the outer pipe extends, a dimension of the outer pipe in a width direction is smaller than a dimension of the outer pipe in a top-and-bottom direction.

EP-A-2050937 discloses an exhaust gas purifying device, especially for a straddle-type vehicle, including an exhaust pipe connected to an engine, an upstream-side and a downstream-side catalyst. A secondary air supply pipe is connected to the exhaust pipe between the upstream-side catalyst and the downstream-side catalyst. Said secondary air supply pipe is connected to a reed valve assembly.

The present invention has been made regarding the state of the art noted above, and its object is to provide a scooter type vehicle having a rigid and compact muffler.

The present invention is constituted as stated in the appended claims to achieve the above object.

The scooter type vehicle includes the handlebar and the seat. The seat is located more rearward than the handlebar. The scooter type vehicle forms the recessed space. The recessed space is positioned more rearward than the handlebar and more forward than the seat in the side view of the scooter type vehicle. The recessed space is dented downward. Consequently, a driver of the scooter type vehicle can get on and off the scooter type vehicle easily with use of the recessed space.

The scooter type vehicle includes the engine, the exhaust pipe, the muffler, and the rear wheel. The exhaust pipe is connected to the engine. The muffler is connected to the exhaust pipe. Exhaust gases flow from the engine to the exhaust pipe. The exhaust gases flow from the exhaust pipe to the muffler. The muffler is located at either a position more rightward than the rear wheel or a position more leftward than the rear wheel. At least part of the muffler overlaps the rear wheel in the side view of the scooter type vehicle. In other words, the muffler is not located below the engine. Accordingly, the engine never interferes with the muffler even if a height position of the engine is made low. Consequently, it is easy to make the height position of the engine low.

The muffler includes the first unit, the connecting portion, and the second unit. The first unit is connected to the exhaust pipe. The connecting portion is connected to the first unit. The second unit is connected to the connecting portion. The exhaust gases flow from the exhaust pipe to the first unit. The exhaust gases flow from the first unit to the connecting portion. The exhaust gases flow from the connecting portion to the second unit.

The first unit includes the first pipe, the first catalyst, the second pipe, and the lid member. The first pipe is connected to the exhaust pipe. The first pipe extends rearward from the exhaust pipe. The first catalyst is installed inside of the first pipe. Specifically, the first pipe has the first housing portion. The first housing portion houses the first catalyst. The first catalyst is installed inside of the first housing portion. The second pipe is located outward of the first pipe. That is, the second pipe houses at least part of the first pipe. The first pipe and the second pipe form a double pipe structure. The second pipe extends to a position more rearward than the first pipe. The second pipe has a rear end. The lid member is attached to the rear end of the second pipe. The lid member closes the rear end of the second pipe. The lid member introduces the exhaust gases, exhausted from the first pipe, into the gap. The gap is formed outward of the first pipe and inward of the second pipe. The connecting portion is in communication with the gap. The exhaust gases flow from the exhaust pipe to the first pipe. The exhaust gases pass through the first catalyst in the first pipe. The exhaust gases flow from the first pipe to the gap. The exhaust gases flow from the gap to the connecting portion. Here, when flowing in the gap, the exhaust gases apply heat from the gap to the first catalyst. Accordingly, the first catalyst is activated rapidly.

The second pipe has the outer circumferential face. The connecting portion is connected to the outer circumferential face of the second pipe. In other words, the connecting portion is not connected to the rear end of the second pipe. The rear end of the second pipe does not support the connecting portion. The connecting portion is not connected to the lid member. The lid member does not support the connecting portion. Accordingly, the second pipe is hard to bend. The lid member is also hard to bend. Consequently, the second pipe does not need an excessively high strength. Also, the lid member does not need an excessively high strength. As a result, the second pipe can support the connecting portion rigidly. The muffler has high rigidity. Moreover, it is easy to make the entire of the first unit and the connecting portion short in the longitudinal direction of the scooter type vehicle. Consequently, it is easy to reduce the size of the muffler.

As described above, the first unit has the double pipe structure. The second pipe rigidly supports the connecting portion even when the first unit has the double pipe structure. That is because the connecting portion is connected to the outer circumferential face of the second pipe. Rather, such a configuration where the connecting portion is connected to the outer circumferential face of the second pipe is significantly usable when the first unit has the double pipe structure.

As described above, the muffler according to the scooter type vehicle of the present invention is rigid and compact. Moreover, the muffler activates the first catalyst rapidly.

It is preferred in the scooter type vehicle described above that
the connecting portion has a first end connected to the first unit,
the first end of the connecting portion entirely contacts an upper part of the
outer circumferential face of the second pipe, and
the connecting portion extends upward from the upper part of the outer circumferential face of the second pipe.

The second pipe can support the connecting portion more rigidly.

It is preferred in the scooter type vehicle described above that
the first end of the connecting portion extends from a position more forward than a front face of the first catalyst to a position more rearward than the front face of the first catalyst.

The first end of the connecting portion extends to the position more forward than the front face of the first catalyst. Accordingly, when flowing in the gap, the exhaust gases suitably apply heat from the gap to the first catalyst. Moreover, the first end of the connecting portion extends to the position more rearward than the front face of the first catalyst. That is, the first end of the connecting portion overlaps the first catalyst in the longitudinal direction of the scooter type vehicle. Accordingly, the second pipe can support the connecting portion more rigidly.

It is preferred in the scooter type vehicle described above that
the connecting portion is entirely located more forward than the lid member.

That is, the connecting portion has no portion positioned more rearward than the lid member. Consequently, it is easier to reduce the size of the muffler.

It is preferred in the scooter type vehicle described above that
the connecting portion is entirely located more forward than a rear face of the first catalyst.

It is easier to reduce the size of the muffler.

It is preferred in the scooter type vehicle described above that
the muffler includes:
a first stay fixed to the connecting portion and configured to support the connecting portion.

The muffler includes the first stay. The first stay is fixed to the connecting portion. The first stay supports the connecting portion. The connecting portion is supported by the first stay more rigidly. Accordingly, the muffler has much high rigidity.

It is preferred in the scooter type vehicle described above that
the first pipe further has a front part extending forward from the first housing portion, and
the front part includes a flow path having a size equal to or larger than a size of the first catalyst.
The first pipe has the front part. The front part extends forward from the first housing portion. The front part has the flow path. The flow path of the front part has a size equal to or larger than the size of the first catalyst. The exhaust gases flow from the front part to the first housing portion. In other words, the exhaust gases flow from the front part to the first catalyst. Here, temperatures of the exhaust gases decrease slightly at the front part. That is because the flow path of the front part has the size equal to or larger than the size of the first catalyst. This prevents the first catalyst from having excessively high temperatures. Specifically, the first catalyst heated with the exhaust gases has the maximum temperature that is not excessively high. Accordingly, the life of the first catalyst increases suitably. In other words, durability of the first catalyst is suitably improved.

It is preferred in the scooter type vehicle described above that
the muffler includes a downstream oxygen sensor located downstream of the first catalyst, and
the downstream oxygen sensor is attached to either the second pipe or the connecting portion.
The downstream oxygen sensor is attached to either the second pipe or the connecting portion. For example, the downstream oxygen sensor is attached to the second pipe. When the downstream oxygen sensor is attached to the second pipe, it is easy to install the downstream oxygen sensor. When the downstream oxygen sensor is attached to the second pipe, there is no need to make the muffler large for installing the downstream oxygen sensor. Alternatively, the downstream oxygen sensor is attached to the connecting portion. When the downstream oxygen sensor is attached to the connecting portion, it is also easy to install the downstream oxygen sensor. When the downstream oxygen sensor is attached to the connecting portion, there is also no need to make the muffler large for installing the downstream oxygen sensor.

It is preferred in the scooter type vehicle described above that
the connecting portion has a first expansion chamber formed inside of the connecting portion.

The exhaust gases expand in the first expansion chamber of the connecting portion. Expansion of the exhaust gases in the first expansion chamber can promote flow of the exhaust gases from the gap to the connecting portion. Expansion of the exhaust gases in the first expansion chamber can promote flow of the exhaust gases from the first pipe to the gap. Accordingly, the exhaust gases flow smoothly from the first pipe to the gap. The exhaust gases flow smoothly from the gap to the connecting portion.

It is preferred in the scooter type vehicle described above that
the connecting portion includes:
   a second end connected to the second unit, and
the second end of the connecting portion has a diameter twice or more as large as a diameter of the first housing portion.
The connecting portion expands the exhaust gases suitably.

It is preferred in the scooter type vehicle described above that
the second unit extends rearward from the connecting portion, and
a length of the second unit in the longitudinal direction of the scooter type vehicle is smaller than a length of the first unit in the longitudinal direction of the scooter type vehicle.
The second unit is relatively short in the longitudinal direction of the scooter type vehicle. Accordingly, the muffler is made more compact.

It is preferred in the scooter type vehicle described above that
the second unit includes:
   a third pipe connected to the connecting portion; and
   a second catalyst arranged inside of the third pipe, and
the second catalyst overlaps the first catalyst in plan view of the scooter type vehicle.
The exhaust gases flow from the connecting portion to the third pipe. The exhaust gases pass through the second catalyst installed inside of the third pipe. The second catalyst overlaps the first catalyst in the plan view of the scooter type vehicle. Accordingly, even when the muffler includes the second catalyst in addition to the first catalyst, it is easy to make the muffler short in the longitudinal direction of the scooter type vehicle. As a result, even when the muffler includes the second catalyst in addition to the first catalyst, it is easy to reduce the size of the muffler.

It is preferred in the scooter type vehicle described above that
the third pipe has a front end,
the front end of the third pipe is connected to the connecting portion, and
the third pipe extends rearward from the connecting portion.
It is easy to make the third pipe short in the longitudinal direction of the scooter type vehicle. Accordingly, it is easy to make the second unit short in the longitudinal direction of the scooter type vehicle. As a result, it is easier to reduce the size of the muffler.

It is preferred in the scooter type vehicle described above that
the second unit includes:
   a casing for housing the third pipe,
the casing has
   a second expansion chamber formed inside of the casing, and
the third pipe is opened to the second expansion chamber.
The exhaust gases flow from the third pipe to the second expansion chamber. The exhaust gases expand in the second expansion chamber. In such a manner as above, the second unit expands the exhaust gases suitably.

It is preferred in the scooter type vehicle described above that
the casing has a cylindrical shape extending in the longitudinal direction of the scooter type vehicle,
the third pipe has
   a second housing portion configured to house the second catalyst,
the casing has a diameter twice or more as large as a diameter of the second housing portion, and
the diameter of the casing is 1.5 times or more as large as a diameter of the second pipe.
The diameter of the casing is relatively large. Accordingly, even when the casing includes the second expansion chamber, it is easy to make the casing short in the longitudinal direction of the scooter type vehicle. Consequently, it is easy to make the second unit short in the longitudinal direction of the scooter type vehicle. As a result, it is easier to reduce the size of the muffler.

It is preferred that the scooter type vehicle includes
a fuel tank, and
at least part of the seat is located higher than an upper end of the fuel tank. The fuel tank allows the scooter type vehicle to form the recessed space. Consequently, the scooter type vehicle can form the recessed space suitably.

A scooter type vehicle, according to this invention, includes:
a handlebar;
a seat located more rearward than the handlebar;
an engine;
an exhaust pipe connected to the engine;
a muffler connected to the exhaust pipe; and
a rear wheel,
the scooter type vehicle forms a recessed space located more rearward than the handlebar and more forward than the seat, and recessed downward in side view of the scooter type vehicle,
the muffler is located at either a position more rightward than the rear wheel or a position more leftward than the rear wheel,
at least part of the muffler overlaps the rear wheel in the side view of the scooter type vehicle,
the muffler includes:
   a first unit connected to the exhaust pipe;
   a connecting portion connected to the first unit; and
   a second unit connected to the connecting portion,
the first unit includes a first catalyst,
the second unit includes a second catalyst, and
the second catalyst overlaps the first catalyst in plan view of the scooter type vehicle.

The muffler includes two catalysts (i.e., first catalyst and second catalyst). The second catalyst overlaps the first catalyst in the plan view of the scooter type vehicle. Consequently, it is easy to make the muffler short in the longitudinal direction of the scooter type vehicle. As a result, even when the muffler includes the two catalysts, it is easy to make the muffler small.

As described above, the second catalyst overlaps the first catalyst in the plan view of the scooter type vehicle. Accordingly, even when the muffler includes the second catalyst in addition to the first catalyst, it is easy to make the muffler with high rigidity.

It is preferred that the scooter type vehicle includes
a rear axle supporting the rear wheel, and
the first catalyst is entirely located more forward than the rear axle, and
the second catalyst is entirely located more forward than the rear axle.

It is easier to make the muffler short in the longitudinal direction of the scooter type vehicle. As a result, it is easier to reduce the size of the muffler.

For the purpose of illustrating the invention, there are shown in the drawings several forms which are presently preferred, it being understood, however, that the invention is not limited to the precise arrangement and instrumentalities shown.
Fig. 1 is a right side view of a scooter type vehicle according to an embodiment.
Fig. 2 is a bottom view of a rear part of the scooter type vehicle.
Fig. 3 is a right side view of a muffler.
Fig. 4 is a sectional view of an interior of the muffler.
Fig. 5 is a right side view of the interior of the muffler.
Fig. 6 is a rear view of the interior of the muffler.
Fig. 7 is a plan view of the muffler.
Fig. 8 is a perspective view of a second pipe and a connecting portion.
Fig. 9 is an exploded perspective view of the second pipe and the connecting portion.
Fig. 10 is a rear view of the interior of the muffler.
Fig. 11 is a right side view of a muffler according to one modification.
Fig. 12 is a right side view of a muffler according to another modification.

A scooter type vehicle 1 according to this invention will be described hereinafter with reference to the drawings.

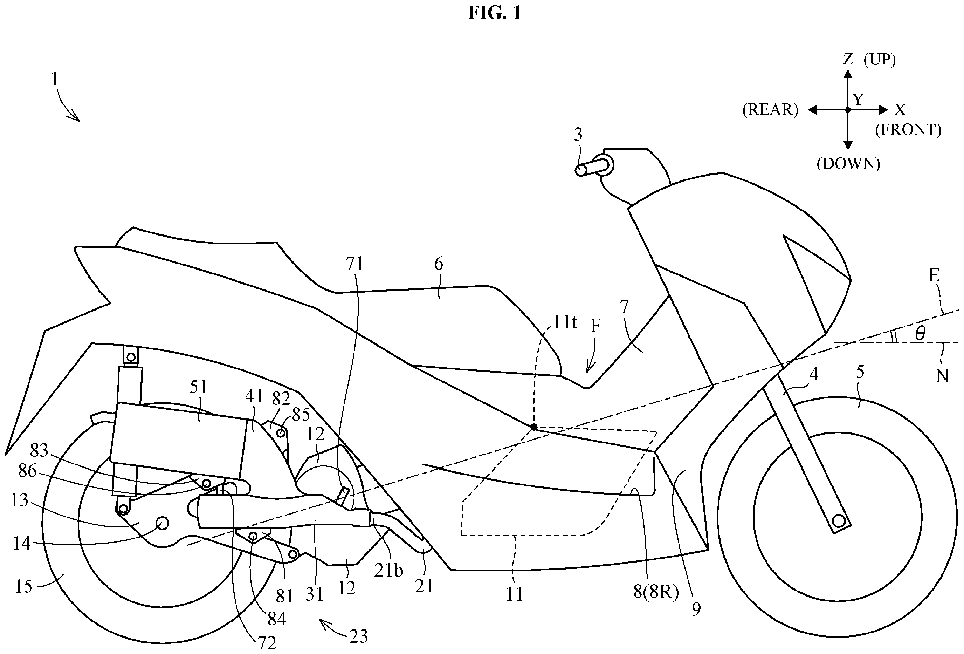

Fig. 1 is a right side view of the scooter type vehicle 1 according to one embodiment. The scooter type vehicle 1 is, for example, a two-wheeled motor vehicle of a scooter type.

Fig. 1 shows a longitudinal direction X, a transverse direction Y, and an up-down direction Z of the scooter type vehicle 1. The longitudinal direction X, transverse direction Y, and up-down direction Z are defined with reference to a driver (also called a rider) riding on the scooter type vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver mounted on the scooter type vehicle 1. Unless otherwise stated in this specification, "forward" and "rearward" include not only directions parallel to the longitudinal direction X but also directions close to the longitudinal direction X. The directions close to the longitudinal direction X are, for example, directions at angles not exceeding 45 degrees to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

It is to be understood that, in this specification, various expressions describing arrangements have the following meanings, respectively. The following description will be made taking the transverse direction Y for example, and the same may apply to the longitudinal direction X and up-down direction Z.

The expression "Member Ma is located more rightward/leftward than Member Mb," defines a position in the transverse direction Y of Member Ma relative to Member Mb, and does not define a position in the longitudinal direction X or the up-down direction Z of Member Ma relative to Member Mb. In the case of this expression, Member Ma may, or may not, overlap Member Mb in a side view of the scooter type vehicle 1.

The expression "Member Ma is located rightward/leftward of Member Mb," without reference to a looking direction defines a position in the transverse direction Y of Member Ma relative to Member Mb, a position in the longitudinal direction X of Member Ma relative to Member Mb, and a position in the up-down direction Z of Member Ma relative to Member Mb. This expression means that Member Ma is located more rightward/leftward than Member Mb, and that at least part of Member Ma overlaps at least part of Member Mb in a side view of the scooter type vehicle 1.

The expression "Member Ma is located rightward/leftward of Member Mb in plan view of the scooter type vehicle 1," defines a position in the transverse direction Y of Member Ma relative to Member Mb, and a position in the longitudinal direction X of Member Ma relative to Member Mb, and does not define a position in the up-down direction Z of Member Ma relative to Member Mb. This expression means that Member Ma is located more rightward/leftward than Member Mb, that a front end of Member Ma is positioned more forward than a rear end of Member Mb, and that a rear end of Member Ma is located more rearward than a front end of Member Mb.

The expression "Member Ma is located rightward/leftward of Member Mb in front view of the scooter type vehicle 1," defines a position in the transverse direction Y of Member Ma relative to Member Mb, and a position in the up-down direction Z of Member Ma relative to Member Mb, and does not define a position in the longitudinal direction X of Member Ma relative to Member Mb. This expression means that Member Ma is located more rightward/leftward than Member Mb, that an upper end of Member Ma is positioned higher than a lower end of Member Mb, and that a lower end of Member Ma is located lower than an upper end of Member Mb.

In the present specification, the language "in side view of the scooter type vehicle 1" is referred to as "in side view of the vehicle", as appropriate. Likewise, the language "in plan view of the scooter type vehicle 1" is referred to as "in plan view of the vehicle", as appropriate. The language "in bottom view of the scooter type vehicle 1" is referred to as "in bottom view of the vehicle", as appropriate. The language "in rear view of the scooter type vehicle 1" is referred to as "in rear view of the vehicle", as appropriate.

The scooter type vehicle 1 includes a handlebar 3. The handlebar 3 is located in a front part of the scooter type vehicle 1.

The scooter type vehicle 1 has a front fork 4, and a front wheel 5. The front fork 4 is coupled to the handlebar 3. The front fork 4 extends downward and forward from the handlebar 3. The front wheel 5 is supported by the front fork 4.

The scooter type vehicle 1 includes a seat 6. The seat 6 is located more rearward than the handlebar 3. At least part of the seat 6 is located more rearward than the entire of the handlebar 3. For example, the entire of the seat 6 is located more rearward than the entire of the handlebar 3. The seat 6 is located lower than the handlebar 3. At least part of the seat 6 is located lower than the entire of the handlebar 3. For example, the entire of the seat 6 is located lower than the entire of the handlebar 3.

The scooter type vehicle 1 forms a recessed space F. The recessed space F is positioned more rearward than the handlebar 3 and more forward than the seat 6 in the side view of the vehicle. At least part of the recessed space F is positioned more rearward than the entire of the handlebar 3 and more forward than the entire of the seat 6 in the side view of the vehicle. For example, the entire of the recessed space F is positioned more rearward than the entire of the handlebar 3 and more forward than the entire of the seat 6 in the side view of the vehicle. The recessed space F is recessed downward in the side view of the vehicle. The recessed space F extends downward in the side view of the vehicle. The recessed space F extends to a position lower than the seat 6 in the side view of the vehicle.

The scooter type vehicle 1 includes a center cover 7. At least part of the center cover 7 is located more rearward than the handlebar 3 and more forward than the seat 6. At least part of the center cover 7 is located more rearward than the entire of the handlebar 3 and more forward than the entire of the seat 6. The center cover 7 extends forward from the seat 6, for example. The center cover 7 is positioned below the recessed space F in the side view of the vehicle. The center cover 7 forms the recessed space F above the center cover 7 in the side view of the vehicle. Specifically, the center cover 7 defines a bottom of the recessed space F in the side view of the vehicle. The center cover 7 contacts the bottom of the recessed space F in the side view of the vehicle.

More specifically, the center cover 7 has an upper edge in the side view of the vehicle. At least part of the upper edge of the center cover 7 is located lower than the seat 6 in the side view of the vehicle. At least part of the upper edge of the center cover 7 is recessed downward in the side view of the vehicle. The recessed space F is formed above the upper edge of the center cover 7 in the side view of the vehicle.

The scooter type vehicle 1 includes a foot board 8. The foot board 8 is located lower than the seat 6. The foot board 8 is located lower than the recessed space F in the side view of the vehicle. The foot board 8 does not contact the recessed space F in the side view of the vehicle. The foot board 8 is located lower than the center cover 7. The foot board 8 extends in the longitudinal direction X in the side view of the vehicle. The foot board 8 extends to a position more forward than the seat 6.

Specifically, the foot board 8 includes a right foot board 8R and a left foot board (not shown). The right foot board 8R is located rightward of the center cover 7. The left foot board is located leftward of the center cover 7. The left foot board is separated from the right foot board 8R by the center cover 7. The right foot board 8R and the left foot board are each located lower than the center cover 7 in the side view of the vehicle.

In other words, the center cover 7 is located between the right foot board 8R and the left foot board in the transverse direction Y. The center cover 7 projects upward from the right foot board 8R and the left foot board. The center cover 7 is curved convexly upward through a cross section perpendicular with respect to the longitudinal direction X. The center cover 7 extends leftward and upward from the right foot board 8R, and extends rightward and upward from the left foot board. The center cover 7 is also referred to as a center tunnel.

The scooter type vehicle 1 includes a leg shield 9. The leg shield 9 is located below the handlebar 3 in the side view of the vehicle. The leg shield 9 is located in front of the center cover 7 in the side view of the vehicle. The leg shield 9 is located in front of the foot board 8 in the side view of the vehicle. The leg shield 9 is located behind the front wheel 5 in the side view of the vehicle.

A driver of the scooter type vehicle 1 grasps the handlebar 3. The driver sits on the seat 6. The recessed space F allows the driver to get on and off the scooter type vehicle 1 easily. For example, the driver can ride on and off the scooter type vehicle 1 with use of the recessed space F. The driver puts driver's feet on the foot board 8. Specifically, the driver puts a driver's right foot on the right foot board 8R. The driver puts a driver's left feet on the left foot board. The leg shield 9 is disposed in front of the driver's legs.

The scooter type vehicle 1 includes a fuel tank 11. Fig. 1 shows the fuel tank 11 with dotted lines. The fuel tank 11 is located lower than the seat 6. At least part of the fuel tank 11 is located lower than the entire of the seat 6. For example, the entire of the fuel tank 11 is located lower than the entire of the seat 6.

The fuel tank 11 includes an upper end 11t. At least part of the seat 6 is located higher than the upper end 11t of the fuel tank 11. For example, the entire of the seat 6 is located higher than the upper end 11t.

The scooter type vehicle 1 includes a body frame (not shown), and an engine 12. The engine 12 is supported by the body frame. The engine 12 generates power.

The engine 12 has a cylinder axis E. The cylinder axis E is an imaginary line. The cylinder axis E is the center of a cylinder bore (not shown) formed in the engine 12. The engine 12 extends along the cylinder axis E. The cylinder axis E is horizontal, for example. The cylinder axis E is substantially horizontal, for example. The cylinder axis E and a horizontal line N form therebetween a relatively small angle θ. The angle θ is 45 degrees or smaller, for example. The angle θ is 30 degrees or smaller, for example. The horizontal line N is an imaginary line. The horizontal line N is parallel to the longitudinal direction X, for example.

The engine 12 is swingable relative to the body frame, for example. The engine 12 is classified as a unit swing type engine.

The scooter type vehicle 1 includes a rear arm 13. The rear arm 13 is supported by the engine 12, for example. The rear arm 13 is fixed to the engine 12. The rear arm 13 extends rearward from the engine 12. The rear arm 13 swings integrally with the engine 12 with respect to the body frame.

The scooter type vehicle 1 includes a rear axle 14 and a rear wheel 15. The rear axle 14 is supported by the rear arm 13. The rear axle 14 extends in the transverse direction Y. The rear wheel 15 is supported by the rear axle 14. The rear wheel 15 is rotatable about the rear axle 14.

The scooter type vehicle 1 includes an exhaust pipe 21 and a muffler 23. The exhaust pipe 21 is connected to the engine 12. The muffler 23 is connected to the exhaust pipe 21. The exhaust pipe 21 swings integrally with the engine 12 with respect to the body frame. The muffler 23 also swings integrally with the engine 12 with respect to the body frame. Exhaust gases flow from the engine 12 to the exhaust pipe 21. Exhaust gases flow from the exhaust pipe 21 to the muffler 23.

The muffler 23 includes a first unit 31, a connecting portion 41, and a second unit 51. The first unit 31 is connected to the exhaust pipe 21. The connecting portion 41 is connected to the first unit 31. The connecting portion 41 is supported by the first unit 31. The second unit 51 is connected to the connecting portion 41. The second unit 51 is supported by the connecting portion 41. The first unit 31 and the second unit 51 are connected via the connecting portion 41. Exhaust gases flow from the exhaust pipe 21 to the first unit 31. Exhaust gases flow from the first unit 31 to the connecting portion 41. Exhaust gases flow from the connecting portion 41 to the second unit 51.

The muffler 23 includes oxygen sensors 71 and 72. The oxygen sensors 71 and 72 are each attached to the first unit 31. The oxygen sensors 71 and 72 each detect a concentration of oxygen in the exhaust gases. The scooter type vehicle 1 includes an electronic control unit not shown. The electronic control unit is referred to as an ECU. The oxygen sensors 71 and 72 are each electrically connected to the ECU. The ECU obtains detection results of the oxygen sensors 71 and 72.

The muffler 23 includes stays 81, 82, and 83. The stay 81 is fixed to the first unit 31. The stay 81 supports the first unit 31. The stay 82 is fixed to the connecting portion 41. The stay 82 supports the connecting portion 41. The stay 83 is fixed to the second unit 51. The stay 83 supports the second unit 51.

The stays 81, 82, and 83 are each supported by the rear arm 13, for example. The stays 81, 82, and 83 are each fastened to the rear arm 13, for example. The stays 81, 82, and 83 are each coupled to the rear arm 13 with bolts 84, 85, and 86, respectively, for example. The muffler 23 is supported by the rear arm 13. The muffler 23 swings integrally with the rear arm 13 with respect to the body frame.

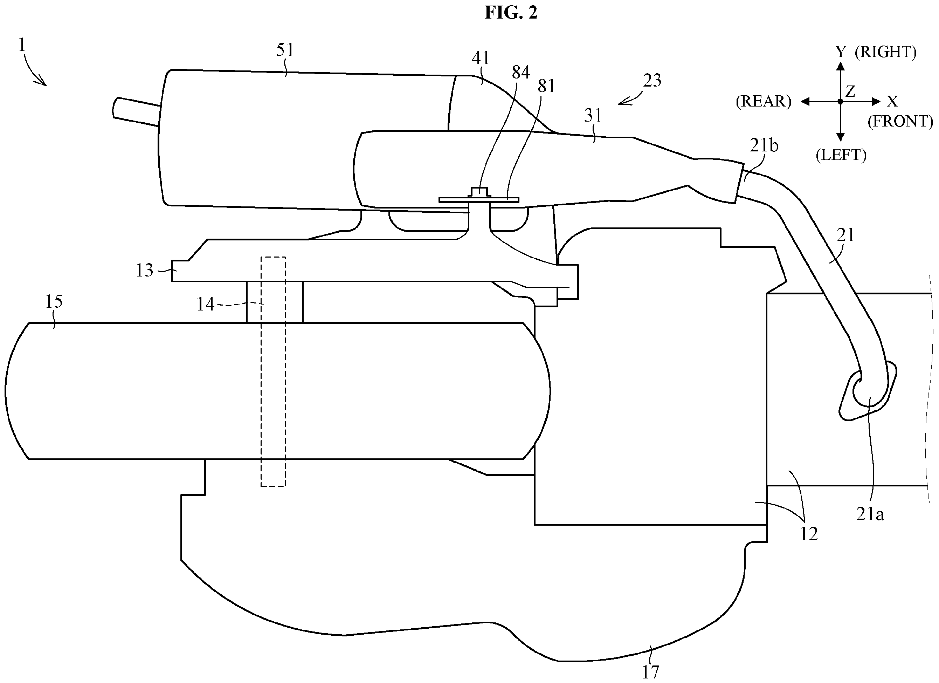

Fig. 2 is a bottom view of a rear part of the scooter type vehicle 1. The rear wheel 15 is located behind the engine 12. The rear arm 13 extends from the engine 12 to a position rightward of the rear wheel 15.

The scooter type vehicle 1 includes a transmission 17. The transmission 17 is supported by the engine 12. The transmission 17 extends rearward from the engine 12. The transmission 17 extends to a position leftward of the rear wheel 15. The transmission 17 swings integrally with the engine 12 with respect to the body frame. The transmission 17 supports the rear axle 14. The transmission 17 swings integrally with the rear arm 13 with respect to the body frame. The transmission 17 transmits power from the engine 12 to the rear wheel 15. The power transmitted from the transmission 17 causes the rear wheel 15 to rotate around the rear axle 14.

Reference is made to Fig. 2. The exhaust pipe 21 is located below the engine 12. The exhaust pipe 21 overlaps the engine 12 in bottom view of the vehicle. The exhaust pipe 21 extends rightward from the engine 12. The exhaust pipe 21 extends to a position more rightward than the engine 12.

The engine 12 includes an exhaust port not shown. The exhaust port is opened downward. The exhaust pipe 21 has a first end 21a and a second end 21b. The first end 21a is connected to the exhaust port. The first end 21a is located below the engine 12. The first end 21a overlaps the engine 12 in the bottom view of the vehicle. The second end 21b is located more rightward than the first end 21a. The second end 21b is located rightward of the engine 12 in the bottom view of the vehicle. The second end 21b does not overlap the engine 12 in the bottom view of the vehicle.

The exhaust pipe 21 has a constant diameter from the first end 21a to the second end 21b. The exhaust pipe 21 does not house a catalyst. The scooter type vehicle 1 does not include a catalyst that is located below the engine 12.

The muffler 23 is connected to the second end 21b of the exhaust pipe 21. The muffler 23 extends rearward from the exhaust pipe 21. The entire of the muffler 23 is located more rearward than the exhaust pipe 21.

The muffler 23 is positioned more rightward than the engine 12. The entire of the muffler 23 is positioned more rightward than the engine 12. The entire of the muffler 23 is positioned more rightward than the entire of the engine 12. The muffler 23 has no portion located below the engine 12. The muffler 23 has no portion that overlaps the engine 12 in the bottom view of the vehicle.

The muffler 23 is positioned more rightward than the rear wheel 15. The entire of the muffler 23 is positioned more rightward than the rear wheel 15. The entire of the muffler 23 is positioned more rightward than the entire of the rear wheel 15.

The muffler 23 is positioned more rightward than the rear arm 13.

Reference is made to Fig. 1. The muffler 23 is located rightward of the engine 12. At least part of the muffler 23 overlaps the engine 12 in the side view of the vehicle.

The muffler 23 is located rightward of the rear wheel 15. At least part of the muffler 23 overlaps the rear wheel 15 in the side view of the vehicle.

The muffler 23 is located rightward of the rear arm 13. At least part of the muffler 23 overlaps the rear arm 13 in the side view of the vehicle.

The muffler 23 is exposed in the side view of the vehicle. The muffler 23 is visible in the side view of the vehicle. The scooter type vehicle 1 does not include a cover member for protecting the muffler 23. The scooter type vehicle 1 does not include a cover member that covers the muffler 23. The scooter type vehicle 1 does not include a cover member that is located outward of the muffler 23 in the transverse direction Y.

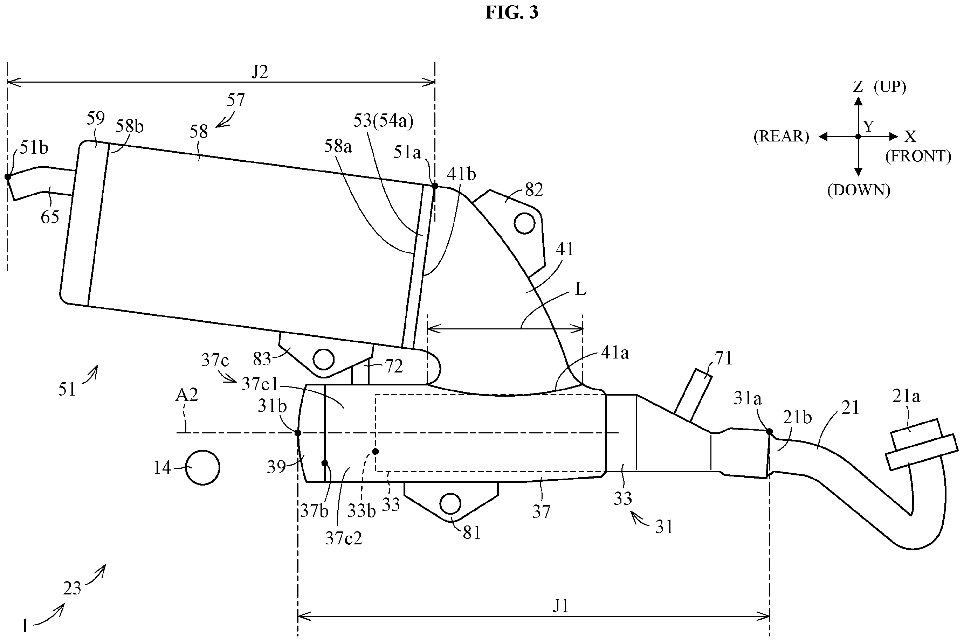

Fig. 3 is a right side view of the muffler 23. The first unit 31 is connected to the second end 21b of the exhaust pipe 21. The first unit 31 extends rearward from the exhaust pipe 21. The first unit 31 extends in the longitudinal direction X. The first unit 31 extends to a position more rearward than the exhaust pipe 21. The first unit 31 extends to a position more rearward than the entire of the exhaust pipe 21. At least part of the first unit 31 is located more rearward than the exhaust pipe 21. At least part of the first unit 31 is located more rearward than the entire of the exhaust pipe 21. For example, the entire of the first unit 31 is located more rearward than the exhaust pipe 21. For example, the entire of the first unit 31 is located more rearward than the entire of the exhaust pipe 21.

The first unit 31 has a front end 31a and a rear end 31b. The front end 31a is connected to the exhaust pipe 21. The front end 31a is supported by the exhaust pipe 21. The rear end 31b is located more rearward than the front end 31a. The rear end 31b is not connected to the connecting portion 41. The rear end 31b does not support the connecting portion 41. The rear end 31b is not connected to the second unit 51. The rear end 31b does not support the second unit 51.

The entire of the first unit 31 is located more forward than the rear axle 14. The entire of the first unit 31 is located more forward than the entire of the rear axle 14.

The first unit 31 is located at a height position substantially equal to that of the rear axle 14.

The connecting portion 41 extends upward from the first unit 31. More specifically, the connecting portion 41 extends upward and rearward.

The connecting portion 41 has a first end 41a and a second end 41b. The first end 41a is connected to the first unit 31. The second end 41b is connected to the second unit 51. The second end 41b is located more rearward than the first end 41a. The second end 41b is located higher than the first end 41a.

The first end 41a is located more rearward than the front end 31a.

The first end 41a is located more forward than the rear end 31b.

The first end 41a is located at a middle part of the first unit 31 in the longitudinal direction X.

The connecting portion 41 is connected to the middle part of the first unit 31 in the longitudinal direction X.

The second end 41b is located more rearward than the front end 31a.

The second end 41b is located more forward than the rear end 31b.

The entire of the connecting portion 41 is located more rearward than the front end 31a of the first unit 31. The connecting portion 41 has no portion positioned more forward than the first unit 31. The connecting portion 41 has no portion positioned more forward than the entire of the first unit 31. The first unit 31 extends to a position more forward than the connecting portion 41.

The entire of the connecting portion 41 is located more forward than the rear end 31b of the first unit 31. The connecting portion 41 has no portion positioned more rearward than the first unit 31. The connecting portion 41 has no portion positioned more rearward than the entire of the first unit 31. The first unit 31 extends to a position more rearward than the connecting portion 41.

The entire of the connecting portion 41 is located more forward than the rear axle 14. The entire of the connecting portion 41 is located more forward than the entire of the rear axle 14.

The second end 41b is located higher than the front end 31a. The second end 41b is located higher than the rear end 31b.

The entire of the first unit 31 is located lower than the second end 41b.

The second unit 51 extends rearward from the connecting portion 41. The second unit 51 extends in the longitudinal direction X. The second unit 51 extends to a position more rearward than the connecting portion 41. The second unit 51 extends to a position more rearward than the entire of the connecting portion 41. At least part of the second unit 51 is located more rearward than the connecting portion 41. At least part of the second unit 51 is located more rearward than the entire of the connecting portion 41. For example, the entire of the second unit 51 is located more rearward than the connecting portion 41. For example, the entire of the second unit 51 is located more rearward than the entire of the connecting portion 41.

The second unit 51 has a front end 51a and a rear end 51b. The front end 51a is connected to the connecting portion 41. The rear end 51b is located more rearward than the front end 51a. The rear end 51b is not connected to the connecting portion 41.

The front end 51a is located more rearward than the front end 31a.

The front end 51a is located more forward than the rear end 31b.

The rear end 51b is located more rearward than the front end 31a.

The rear end 51b is located more rearward than the rear end 31b.

The entire of the second unit 51 is located more rearward than the front end 31a of the first unit 31. The first unit 31 extends to a position more forward than the second unit 51.

The second unit 51 extends to a position more forward than the rear end 31b of the first unit 31. The first unit 31 extends to a position more rearward than the front end 51a of the second unit 51.

The second unit 51 extends to a position more rearward than the first unit 31. The entire of the first unit 31 is located more forward than the rear end 51b of the second unit 51.

The second unit 51 extends rearward from a position more forward than the rear axle 14. The second unit 51 extends to a position more rearward than the rear axle 14.

The front end 51a is located higher than the front end 31a.

The front end 51a is located higher than the rear end 31b.

The rear end 51b is located higher than the front end 31a. The rear end 51b is located higher than the rear end 31b.

The second unit 51 is located higher than the first unit 31. The entire of the second unit 51 is located higher than the first unit 31. The entire of the second unit 51 is located higher than the rear end 31b of the first unit 31.

The second unit 51 is located higher than the rear axle 14. The entire of the second unit 51 is located higher than the rear axle 14.

Fig. 3 shows lengths J1 and J2. The length J1 corresponds to a length of the first unit 31 in the longitudinal direction X. The length J1 corresponds to a distance in the longitudinal direction X between the front end 31a and the rear end 31b. The length J2 corresponds to a length of the second unit 51 in the longitudinal direction X. The length J2 corresponds to a distance in the longitudinal direction X between the front end 51a and the rear end 51b. The length J2 is smaller than the length J1.

The length J1 corresponds to an entire length of the first unit 31 and the connecting portion 41 in the longitudinal direction X.

The oxygen sensor 71 is located more rearward than the front end 31a of the first unit 31 and more forward than the rear end 31b of the first unit 31.

The oxygen sensor 71 extends upward from the first unit 31.

The oxygen sensor 71 is located more forward than the connecting portion 41. The oxygen sensor 71 is located more forward than the second unit 51.

The oxygen sensor 72 is located more rearward than the front end 31a of the first unit 31 and more forward than the rear end 31b of the first unit 31.

The oxygen sensor 72 is located more rearward than the oxygen sensor 71. The oxygen sensor 72 extends upward from the first unit 31.

The oxygen sensor 72 is located more rearward than the connecting portion 41. The entire of the connecting portion 41 is located more forward than the oxygen sensor 72.

The oxygen sensor 72 is located more rearward than the front end 51a of the second unit 51. The oxygen sensor 72 is located more forward than the rear end 51b of the second unit 51.

The oxygen sensor 72 is located more forward than the rear axle 14.

The oxygen sensor 72 is installed below the second unit 51 in side view of the vehicle. A separation distance between the first unit 31 and the second unit 51 is large enough to locate the oxygen sensor 72.

The stay 81 extends downward from the first unit 31.

The entire of the stay 81 is located more forward than the rear axle 14.

The stay 82 extends upward from the connecting portion 41. More specifically, the stay 82 extends upward and forward from the connecting portion 41.

The entire of the stay 82 is located higher than the first unit 31.

The entire of the stay 82 is located more forward than the rear axle 14.

The stay 83 extends downward from the second unit 51.

The entire of the stay 83 is located more rearward than the connecting portion 41.

The entire of the stay 83 is located more forward than the rear axle 14.

At least part of the stay 83 is located more forward than the rear end 31b of the first unit 31. The stay 83 is located above the first unit 31 in side view of the vehicle. The separation distance between the first unit 31 and the second unit 51 is large enough to install the stay 83.

The stay 82 corresponds to one example of the first stay in the present invention.

Reference is made to Fig. 3. The first unit 31 includes a first pipe 33. The first pipe 33 is connected to the exhaust pipe 21. The first pipe 33 extends rearward from the exhaust pipe 21. The first pipe 33 extends in the longitudinal direction X. The first pipe 33 extends to a position more rearward than the exhaust pipe 21. The first pipe 33 extends to a position more rearward than the entire of the exhaust pipe 21. At least part of the first pipe 33 is located more rearward than the exhaust pipe 21. At least part of the first pipe 33 is located more rearward than the entire of the exhaust pipe 21. For example, the entire of the first pipe 33 is located more rearward than the exhaust pipe 21. For example, the entire of the first pipe 33 is located more rearward than the entire of the exhaust pipe 21. Fig. 3 partially shows the first pipe 33 with dotted lines.

The first unit 31 includes a second pipe 37. The second pipe 37 is installed outward of the first pipe 33. The second pipe 37 houses at least part of the first pipe 33. The second pipe 37 extends in the longitudinal direction X. The second pipe 37 extends to a position more rearward than the first pipe 33. The second pipe 37 extends to a position more rearward than the entire of the first pipe 33. Part of the second pipe 37 is located more rearward than the first pipe 33. Part of the second pipe 37 is located more rearward than the entire of the first pipe 33.

The second pipe 37 has a rear end 37b and an outer circumferential face 37c. The rear end 37b is located more rearward than the first pipe 33. The rear end 37b is located more rearward than the entire of the first pipe 33. The outer circumferential face 37c is also referred to as a side of the second pipe 37. The outer circumferential face 37c extends forward from the rear end 37b. The outer circumferential face 37c is located outward of the first pipe 33.

The first unit 31 includes a first lid member 39. The first lid member 39 is attached to the rear end 37b of the second pipe 37. The first lid member 39 closes the rear end 37b of the second pipe 37.

The connecting portion 41 is connected to the outer circumferential face 37c of the second pipe 37. Accordingly, the connecting portion 41 is supported by the second pipe 37.

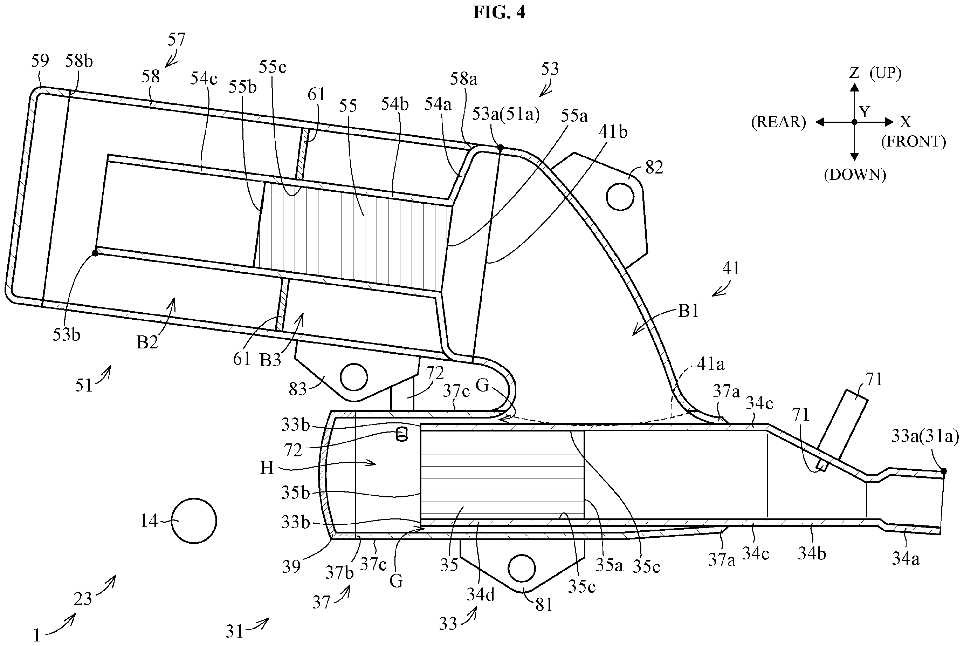

Fig. 4 is a sectional view of an interior of the muffler 23. The first unit 31 includes a first catalyst 35. The first catalyst 35 is installed inside of the first pipe 33. The first catalyst 35 purifies exhaust gases.

The first pipe 33 and the second pipe 37 define a gap G. The gap G is formed outward of the first pipe 33 and inward of the second pipe 37. The gap G is formed inward of the outer circumferential face 37c.

The connecting portion 41 is in communication with the gap G.

The connecting portion 41 includes a first expansion chamberB1. The first expansion chamber B1 is a space. The first expansion chamber B1 is formed inside of the connecting portion 41.

The second unit 51 includes a third pipe 53. The third pipe 53 is connected to the connecting portion 41.

The second unit 51 includes a second catalyst 55. The second catalyst 55 is housed inside of the third pipe 53.

The second unit 51 includes a casing 57. The casing 57 houses the third pipe 53.

The casing 57 includes a second expansion chamber B2. The second expansion chamber B2 is a space. The second expansion chamber B2 is formed inside of the casing 57. The third pipe 53 is opened to the second expansion chamber B2.

The second unit 51 includes a partition wall 61. The partition wall 61 is installed inside of the casing 57.

The casing 57 further includes a third expansion chamber B3. The third expansion chamber B3 is a space. The third expansion chamber B3 is formed inside of the casing 57. The third expansion chamber B3 is separated from the second expansion chamber B2 by the partition wall 61. The partition wall 61 is also called a separator.

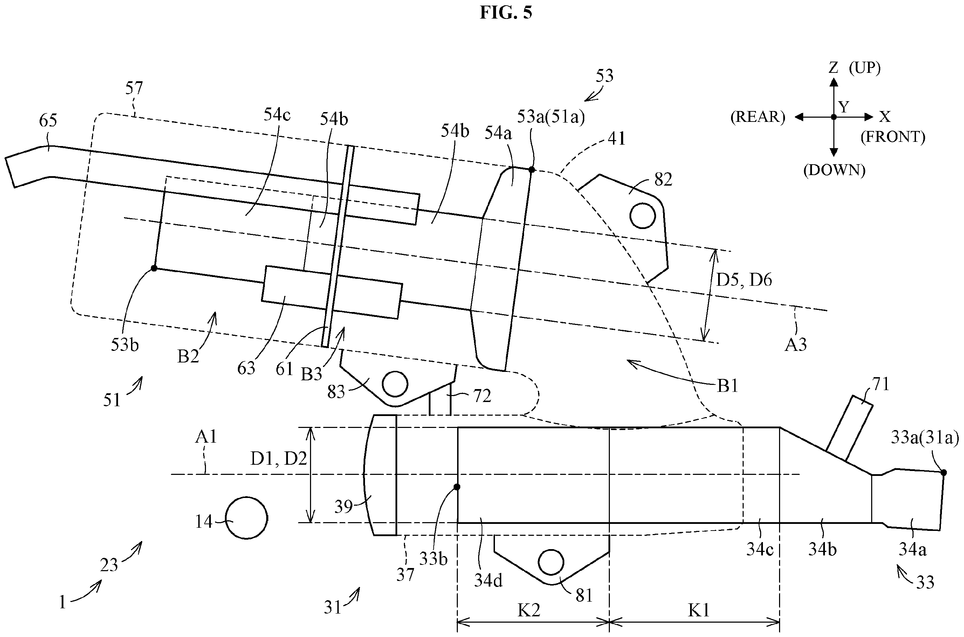

Fig. 5 is a right side view of the interior of the muffler 23. Fig. 5 shows the second pipe 37, the connecting portion 41, and the casing 57 with dotted lines. The second unit 51 includes a fourth pipe 63 and a fifth pipe 65. The second expansion chamber B2 is in communication with the third expansion chamber B3 via the fourth pipe 63. The third expansion chamber B3 is in communication with the outside of the muffler 23 via the fifth pipe 65. The outside of the muffler 23 is, for example, the outside of the scooter type vehicle 1.

The following describes flow of exhaust gases in the muffler 23. The exhaust gases flow from the exhaust pipe 21 to the first pipe 33. The exhaust gases pass through the first catalyst 35. The exhaust gases are exhausted from the first pipe 33. The first lid member 39 introduces the exhaust gases, exhausted from the first pipe 33, into the gap G. The exhaust gases enter the gap G. The exhaust gases flow from the gap G to the connecting portion 41. The exhaust gases expand in the first expansion chamber B1 of the connecting portion 41. The exhaust gases flow from the connecting portion 41 to the third pipe 53. The exhaust gases flow from third pipe 53 to the second expansion chamber B2. The exhaust gases expand in the second expansion chamber B2. The exhaust gases flow from the second expansion chamber B2 to the fourth pipe 63. The exhaust gases flow from the fourth pipe 63 to the third expansion chamber B3. The exhaust gases expand in the third expansion chamber B3. The exhaust gases flow from the third expansion chamber B3 to the fifth pipe 65. The exhaust gases flow from the fifth pipe 65 to the outside of the muffler 23. For example, the exhaust gases are exhausted from the fifth pipe 65 to the outside of the scooter type vehicle 1.

The following describes the flow of the exhaust gases from the first pipe 33 to the gap G in more details. Exhaust gases are exhausted rearward from the first pipe 33. The first lid member 39 returns back all of the exhaust gases, exhausted from the first pipe 33, forward. All of the exhaust gases change their directions forward at the first lid member 39. All of the exhaust gases turn forward at the first lid member 39. All of the exhaust gases enter the gap G. All of the exhaust gases flow forward in the gap G.

All of the exhaust gases flow from the gap G to the connecting portion 41, and expands in the first expansion chamber B1. Expansion of the exhaust gases in the first expansion chamber B1 promotes flow of the exhaust gases from the gap G to the connecting portion 41. In other words, the first expansion chamber B1 draws the exhaust gases from the gap G. Moreover, expansion of the exhaust gases in the first expansion chamber B1 promotes flow of the exhaust gases from the first pipe 33 to the gap G. Accordingly, the exhaust gases flow smoothly from the first pipe 33 to the gap G. The exhaust gases flow smoothly from the gap G to the connecting portion 41.

The first lid member 39 is one example of the lid member in the present invention.

Reference is made to Fig. 5. The following describes the first pipe 33. The first pipe 33 has a front end 33a and a rear end 33b. The front end 33a corresponds to the front end 31a of the first unit 31. The front end 33a is connected to the exhaust pipe 21. The rear end 33b is located more rearward than the front end 33a. Exhaust gases flow from the exhaust pipe 21 into the first pipe 33 via the front end 33a. The exhaust gases are exhausted from the first pipe 33 via the rear end 33b.

The first pipe 33 has a joint 34a. The joint 34a is connected to the exhaust pipe 21. The joint 34a includes the front end 33a of the first pipe 33.

The first pipe 33 has an enlarged portion 34b. The enlarged portion 34b extends rearward from the joint 34a. The enlarged portion 34b has a flow path that expands toward rearward.

The first pipe 33 has a front part 34c. The front part 34c does not house the first catalyst 35.

The front part 34c extends rearward from the enlarged portion 34b. The front part 34c has a cylindrical shape extending in the longitudinal direction X. The front part 34c has a flow path with a circular cross section.

Specifically, the front part 34c has a cylindrical shape with a first axis A1 as the center. The first axis A1 is an imaginary line. The first axis A1 extends in the longitudinal direction X.

The front part 34c has a diameter D1. The diameter D1 is constant along the first axis A1. The diameter D1 is larger than a diameter of the exhaust pipe 21. The diameter D1 is, for example, twice or more as large as the diameter of the exhaust pipe 21.

The first pipe 33 has a first housing portion 34d. The first housing portion 34d houses the first catalyst 35.

The first housing portion 34d extends rearward from the front part 34c. The first housing portion 34d extends in the longitudinal direction X. The first housing portion 34d extends to a position more rearward than the front part 34c. The first housing portion 34d extends to a position more rearward than the entire of the front part 34c. At least part of the first housing portion 34d is located more rearward than the front part 34c. At least part of the first housing portion 34d is located more rearward than the entire of the front part 34c. For example, the entire of the first housing portion 34d is located more rearward than the front part 34c. For example, the entire of the first housing portion 34d is located more rearward than the entire of the front part 34c.

In other words, the front part 34c extends forward from the first housing portion 34d. The front part 34c extends in the longitudinal direction X. The front part 34c extends to a position more forward than the first housing portion 34d. The front part 34c extends to a position more forward than the entire of the first housing portion 34d. At least part of the front part 34c is located more forward than the first housing portion 34d. At least part of the front part 34c is located more forward than the entire of the first housing portion 34d. For example, the entire of the front part 34c is located more forward than the first housing portion 34d. For example, the entire of the front part 34c is located more forward than the entire of the first housing portion 34d.

The front part 34c is located more forward than the first catalyst 35. The entire of the front part 34c is located more forward than the first catalyst 35. The entire of the front part 34c is located more forward than the entire of the first catalyst 35.

The first housing portion 34d has a cylindrical shape extending in the longitudinal direction X. Specifically, the first housing portion 34d has a cylindrical shape with the first axis A1 as the center. The first housing portion 34d has a flow path with a circular cross section.

The first housing portion 34d has a diameter D2. The diameter D2 is constant along the first axis A1. The diameter D2 is substantially equal to the diameter D1.

The rear end 33b of the first pipe 33 corresponds to the rear end of the first housing portion 34d.

The exhaust gases flow from the exhaust pipe 21 to the joint 34a. The exhaust gases flow from the joint 34a to the enlarged portion 34b. The exhaust gases flow from the enlarged portion 34b to the front part 34c. The exhaust gases flow from the front part 34c to the first housing part 34d. The exhaust gases are exhausted from the rear end of the first housing portion 34d.

The flow path of the first housing portion 34d has a size equal to or larger than a size of the first catalyst 35.

Fig. 5 shows lengths K1 and K2. The length K1 is a length of the front part 34c. The length K2 is a length of the first housing portion 34d. More specifically, the length K1 is a length of the front part 34c along the first axis A1. The length K2 is a length of the first housing portion 34d along the first axis A1. The length K1 is equal to or more than the length K2. For example, the length K1 is larger than the length K2.

The length K2 corresponds to a length of the first catalyst 35. More specifically, the length K2 corresponds to the length of the first catalyst 35 along the first axis A1.

Reference is made to Fig. 4. The following describes the first catalyst 35. The first catalyst 35 is installed inside of the first housing portion 34d. The first catalyst 35 is installed in the flow path of the first housing portion 34d.

The first catalyst 35 is located more forward than the rear axle 14. The entire of the first catalyst 35 is located more forward than the rear axle 14. The entire of the first catalyst 35 is located more forward than the entire of the rear axle 14.

The first catalyst 35 has a front face 35a, a rear face 35b, and an outer circumferential face 35c. The front face 35a is positioned at a front end of the first housing portion 34d. The front face 35a has a size substantially equal to a cross section of the flow path of the first housing portion 34d. The front face 35a extends to an inner circumference face of the first housing portion 34d. The front face 35a contacts the inner circumference face of the first housing portion 34d. The rear face 35b is positioned at the rear end of the first housing portion 34d. The rear face 35b has a size substantially equal to the cross section of the flow path of the first housing portion 34d. The rear face 35b extends to the inner circumference face of the first housing portion 34d. The rear face 35b contacts the inner circumference face of the first housing portion 34d. The outer circumferential face 35c extends from the front face 35a to the rear face 35b. The outer circumferential face 35c contacts the inner circumference face of the first housing portion 34d.

Exhaust gases enter the first catalyst 35 through the front face 35a. The exhaust gases exit from the first catalyst 35 through the rear face 35b. The exhaust gases do not pass through the outer circumferential face 35c. The exhaust gases do not enter the first catalyst 35 through the outer circumferential face 35c. An amount of exhaust gases entering the first catalyst 35 through the front face 35a corresponds to a total amount of exhaust gases entering the first catalyst 35. The exhaust gases do not exit from the first catalyst 35 through the outer circumferential face 35c. An amount of exhaust gases exiting from the first catalyst 35 through the rear face 35b corresponds to a total amount of exhaust gases exiting from the first catalyst 35.

Reference is made to Fig. 3. The following describes the second pipe 37 and the first lid member 39. The second pipe 37 is exposed in the side view of the vehicle. The second pipe 37 is visible in the side view of the vehicle. The muffler 23 does not include a member for covering the second pipe 37. The muffler 23 does not include a member for housing the second pipe 37.

The second pipe 37 has a cylindrical shape with a second axis A2 as the center. The second axis A2 is an imaginary line. The second axis A2 extends in the longitudinal direction X.

The first lid member 39 has a plate shape. The first lid member 39 extends in a radial direction of the second axis A2. The radial direction of the second axis A2 corresponds to a direction orthogonal with respect to the second axis A2.

The first lid member 39 includes the rear end 31b of the first unit 31.

Reference is made to Fig. 4. The second pipe 37 houses the first housing portion 34d. The second pipe 37 houses the entire of the first housing portion 34d.

The second pipe 37 houses the front part 34c. The second pipe 37 houses a part of the front part 34c.

The second pipe 37 does not house the joint 34a. The second pipe 37 does not house the enlarged portion 34b.

The second pipe 37 has a front end 37a. The front end 37a is located more forward than the rear end 37b. The outer circumferential face 37c extends from the rear end 37b to the front end 37a.

The front end 37a is located more rearward than the front end 33a of the first pipe 33. The front end 37a is located more forward than the rear end 33b of the first pipe 33.

The front end 37a is connected to the first pipe 33. The front end 37a is tightly attached to the outer circumferential face of the first pipe 33.

More specifically, the front end 37a is coupled to the front part 34c. The front end 37a is tightly attached to the outer circumferential face of the front part 34c.

The gap G extends forward from the rear end 33b of the first pipe 33. The gap G extends from the rear end 33b of the first pipe 33 to the front end 37a of the second pipe 37.

The gap G is closed at the front end 37a. The gap G is sealed at the front end 37a.

The front end 37a is located more forward than the first housing portion 34d. The front end 37a is located more forward than the entire of the first housing portion 34d. Accordingly, the gap G extends to a position more forward than the first housing portion 34d. The gap G extends to a position more forward than the entire of the first housing portion 34d. The gap G is located outward of the first housing portion 34d. The gap G is located outward of the entire of the first housing portion 34d. The gap G contacts the first housing portion 34d. The gap G contacts the entire of the first housing portion 34d.

The front end 37a is located more forward than the first catalyst 35. The front end 37a is located more forward than the entire of the first catalyst 35. Accordingly, the gap G extends to a position more forward than the first catalyst 35. The gap G extends to a position more forward than the entire of the first catalyst 35.

Moreover, the gap G is located outward of the front part 34c. The gap G is located outward of a part of the front part 34c. The gap G contacts the front part 34c. The gap G contacts a part of the front part 34c.

The second pipe 37 houses the rear end 33b of the first pipe 33. The rear end 37b of the second pipe 37 is located more rearward than the rear end 33b of the first pipe 33.

The rear end 33b of the first pipe 33 is opened to the inside of the second pipe 37. The rear end 33b of the first pipe 33 is opened to a rear space H. The rear space H is a part of the inside of the second pipe 37. The rear space H is positioned more rearward than the first pipe 33. The rear space H is positioned behind the first pipe 33. The rear space H contacts the rear end 33b of the first pipe 33. The rear space H is in communication with the gap G. The rear space H is positioned behind the gap G. The rear space H contacts the gap G.

The first lid member 39 is tightly attached to the rear end 37b of the second pipe 37.

The first lid member 39 seals the rear space H.

Exhaust gases flow from the first pipe 33 to the rear space H. The exhaust gases flow from the rear space H to the gap G.

As described above, the exhaust gases expand in the first expansion chamber B1 of the connecting portion 41. Expansion of the exhaust gases in the first expansion chamber B1 promotes flow of the exhaust gases from the first pipe 31 to the rear space H. Expansion of the exhaust gases in the first expansion chamber B1 promotes flow of the exhaust gases from the rear space H to the gap G. As a result, exhaust gases hardly stagnate in the rear space H.

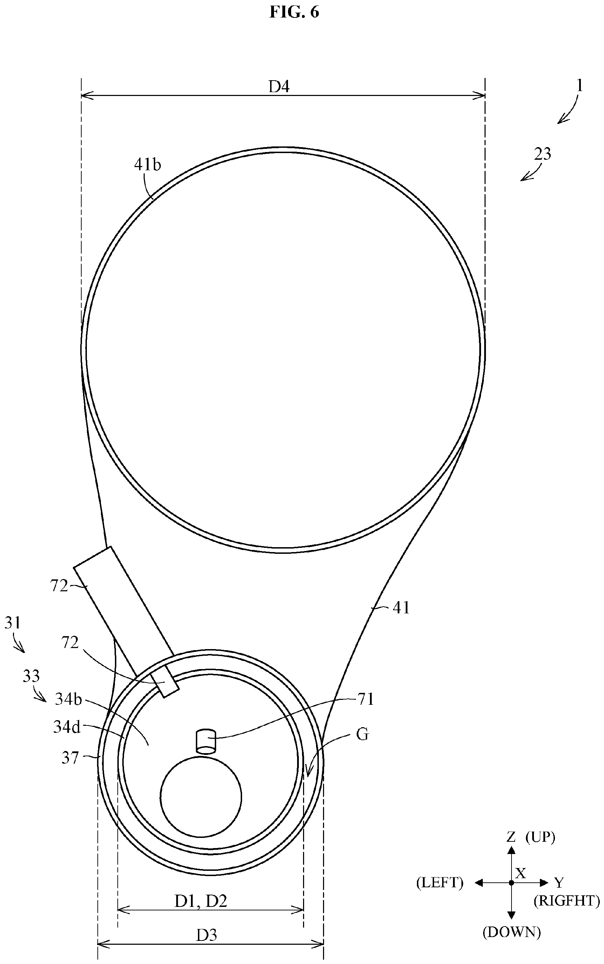

Fig. 6 is a rear view of the interior of the muffler 23. Fig. 6 omits illustration of the first catalyst 35 and the first lid member 39. Fig. 6 omits illustration of the second unit 51. The first pipe 33 and the second pipe 37 form a double pipe structure. The first pipe 33 corresponds to an inner pipe of the double pipe structure. The second pipe 37 corresponds to an outer pipe of the double pipe structure. The double pipe structure is also called a labyrinth configuration. The second pipe 37 is located outward in a radial direction of the first axis A1 with respect to the first pipe 33. The radial direction of the first axis A1 corresponds to a direction orthogonal with respect to the first axis A1.

The second pipe 37 is substantially coaxial with the first pipe 33, for example. The second pipe 37 is substantially coaxial with the front part 34c, for example. The second pipe 37 is substantially coaxial with the first housing portion 34d, for example. The second axis A2 is substantially coincident with the first axis A1, for example.

The second pipe 37 has a diameter D3. The diameter D3 is slightly larger than the diameter of the first pipe 33.

The diameter D3 is slightly larger than the diameter D1 of the front part 34c. The diameter D3 is, for example, 1.5 times or less as large as the diameter D1. The diameter D3 is, for example, 1.1 times or more as large as the diameter D1.

The diameter D3 is slightly larger than the diameter D2 of the first housing portion 34d. The diameter D3 is, for example, 1.5 times or less as large as the diameter D2. The diameter D3 is, for example, 1.1 times or more as large as the diameter D2.

The gap G is of an annular ring shape.

Reference is made to Fig. 3. The first end 41a of the connecting portion 41 contacts the outer circumferential face 37c of the second pipe 37. The connecting portion 41 extends upward from the outer circumferential face 37c.

The outer circumferential face 37c includes an upper part 37c1 and a lower part 37c2. The upper part 37c1 is a part of the outer circumferential face 37c positioned higher than the second axis A2. The lower part 37c2 is a part of the outer circumferential face 37c positioned lower than the second axis A2. The first end 41a contacts the upper part 37c1. The entire of the first end 41a contacts the upper part 37c1. The first end 41a does not contact the lower part 37c2. The connecting portion 41 extends upward from the upper part 37c1. The entire of the connecting portion 41 is located higher than the second axis A2.

The first end 41a of the connecting portion 41 extends in the longitudinal direction X in the side view of the vehicle.

Fig. 3 shows a length L. The length L corresponds to a length of the first end 41a in the longitudinal direction X. The length L is larger than the diameter D1. The length L is larger than the diameter D2. The length L is larger than the diameter D3. The length L is larger than the length K2. The length L is substantially equal to the length K1.

Reference is made to Fig. 4. The entire of the first end 41a of the connecting portion 41 is located more rearward than the front end 33a of the first pipe 33.

The entire of the first end 41a is located more rearward than the front end 37a of the second pipe 37.

The entire of the first end 41a is located more forward than the rear end 37b of the second pipe 37.

The entire of the first end 41a is located more forward than the rear end 33b of the first pipe 33.

The entire of the first end 41a is located more forward than the rear end of the first housing portion 34d.

The entire of the first end 41a is located more forward than a rear face 35b of the first catalyst 35.

The first end 41a extends from a position more forward than the front end of the first housing portion 34d to a position more rearward than the front end of the first housing portion 34d.

The first end 41a extends from a position more forward than the front face 35a of the first catalyst 35 to a position more rearward than the front face 35a of the first catalyst 35. An area in the longitudinal direction X where the first end 41a is positioned overlaps an area in the longitudinal direction X where the first catalyst 35 is positioned. A front end of the first end 41a is located more forward than the front face 35a of the first catalyst 35. A rear end of the first end 41a is located more rearward than the front face 35a of the first catalyst 35.

The entire of the connecting portion 41 is located more rearward than the front end 33a of the first pipe 33. The connecting portion 41 has no portion positioned more forward than the first pipe 33. The connecting portion 41 has no portion positioned more forward than the entire of the first pipe 33.

The entire of the connecting portion 41 is located more rearward than the front end 37a of the second pipe 37. The connecting portion 41 has no portion positioned more forward than the second pipe 37. The connecting portion 41 has no portion positioned more forward than the entire of the second pipe 37.

The entire of the connecting portion 41 is located more forward than the first lid member 39. The entire of the connecting portion 41 is located more forward than the entire of the first lid member 39. The connecting portion 41 has no portion positioned more rearward than the first lid member 39. The connecting portion 41 has no portion positioned more rearward than the entire of the first lid member 39.

The entire of the connecting portion 41 is located more forward than the rear end 37b of the second pipe 37.

The entire of the connecting portion 41 is located more forward than the rear end 33b of the first pipe 33.

The entire of the connecting portion 41 is located more forward than the rear end of the first housing portion 34d.

The entire of the connecting portion 41 is located more forward than the rear face 35b of the first catalyst 35.

The connecting portion 41 has a flow path that expands from the first end 41a toward the second end 41b. The flow path of the connecting portion 41 corresponds to the first expansion chamber B1.

Reference is made to Fig. 6. The second end 41b has a flow path sectional area larger than that of the first housing portion 34d.

The second end 41b of the connecting portion 41 has substantially a circular shape in the rear view of the vehicle. The second end 41b has a diameter D4. The diameter D4 is larger than the diameter D2 of the first housing portion 34d. The diameter D4 is, for example, twice or more as large as the diameter D2.

The flow path sectional area of the second end 41b is larger than that of the second pipe 37.

The diameter D4 is larger than the diameter D3 of the second pipe 37. The diameter D4 is, for example, 1.5 times or more as large as the diameter D3.

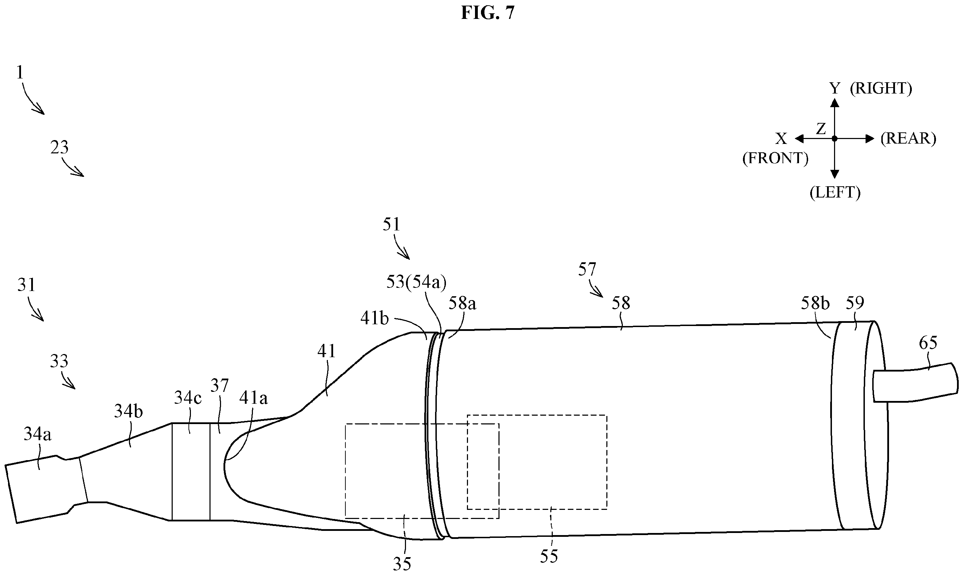

Fig. 7 is a plan view of the muffler 23. Fig. 7 omits illustration of the oxygen sensors 71, 72 and the stays 81 to 83. Fig. 7 shows the first catalyst 35 by alternate long and short dashed lines. The connecting portion 41 overlaps the first catalyst 35 in the plan view of the vehicle. At least part of the connecting portion 41 overlaps the first catalyst 35 in the plan view of the vehicle.

The second pipe 37 and the connecting portion 41 are formed with a plurality of members, for example. The following describes examples of structures of the second pipe 37 and the connecting portion 41.

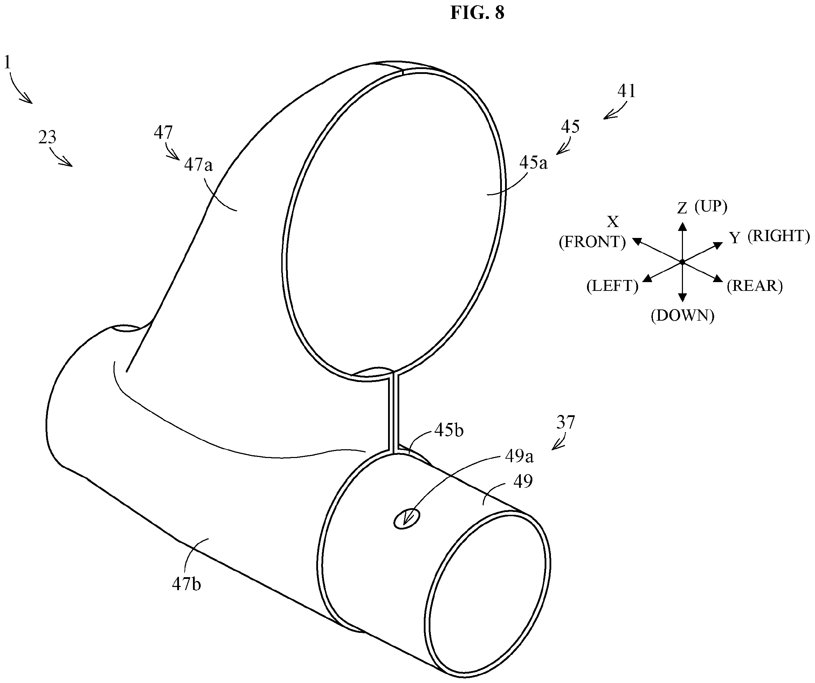

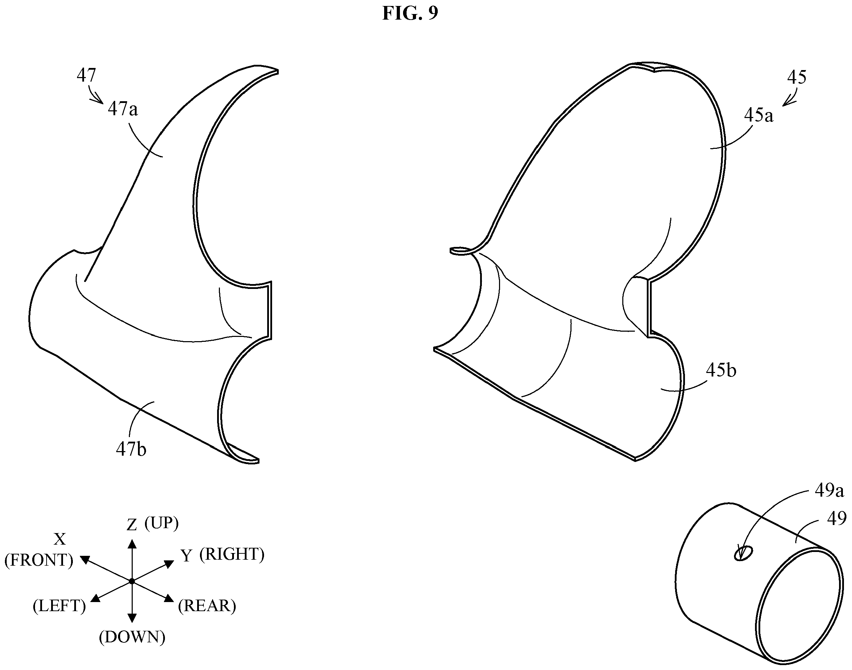

Fig. 8 is a perspective view of the second pipe 37 and the connecting portion 41. Fig. 9 is an exploded perspective view of the second pipe 37 and the connecting portion 41. The second pipe 37 and the connecting portion 41 are composed of a first member 45, a second member 47, and a third member 49. The first member 45, the second member 47, and the third member 49 are separable from one another. The first member 45 has an upper portion 45a and a lower portion 45b. The upper portion 45a is formed integrally with the lower portion 45b. The upper portion 45a and the lower portion 45b are inseparable from each other. The second member 47 is located leftward of the first member 45. The second member 47 is symmetrical in shape with respect to the first member 45. The second member 47 has an upper portion 47a and a lower portion 47b. The upper portion 47a is formed integrally with the lower portion 47b. The upper portion 47a and the lower portion 47b are inseparable from each other. The first member 45 and the second member 47 are coupled to one another. The upper portion 45a and the upper portion 47a are coupled to each other. The lower portion 45b and the lower portion 47b are coupled to each other. The third member 49 has a tube shape. The third member 49 has a hole 49a for attachment of the oxygen sensor 72. The third member 49 is located behind the lower portion 45b and the lower portion 47b. The third member 49 is coupled to the lower portion 45b and the lower portion 47b. The third member 49 extends rearward from the lower portion 45b and the lower portion 47b. The upper portion 45a and the upper portion 47a form the connecting portion 41. The lower portion 45b, the lower portion 47b, and the third member 49 form the second pipe 37.

Reference is made to Fig. 5. The third pipe 53 extends rearward from the connecting portion 41. The third pipe 53 extends in the longitudinal direction X. The third pipe 53 extends to a position more rearward than the connecting portion 41. The third pipe 53 extends to a position more rearward than the entire of the connecting portion 41. At least part of the third pipe 53 is located more rearward than the connecting portion 41. At least part of the third pipe 53 is located more rearward than the entire of the connecting portion 41. For example, the entire of the third pipe 53 is located more rearward than the connecting portion 41. For example, the entire of the third pipe 53 is located more rearward than the entire of the connecting portion 41.

The third pipe 53 has a front end 53a and a rear end 53b. The front end 53a corresponds to the front end 51a of the second unit 51. The front end 53a is connected to the connecting portion 41. The rear end 53b is located more rearward than the front end 53a. Exhaust gases flow from the connecting portion 41 into the third pipe 53 via the front end 53a. Exhaust gases are exhausted from the third pipe 53 into the second expansion chamber B2 via the rear end 53b.

The third pipe 53 has a reduced portion 54a. The reduced portion 54a is connected to the second end 41b of the connecting portion 41. The reduced portion 54a includes the front end 53a of the third pipe 53. The reduced portion 54a extends rearward from the connecting portion 41. The reduced portion 54a has a flow path that shrinks toward rearward.

The third pipe 53 has a second housing portion 54b. The second housing portion 54b houses the second catalyst 55.

The second housing portion 54b extends rearward from the reduced portion 54a. The second housing portion 54b has a cylindrical shape extending in the longitudinal direction X. The second housing portion 54b has a flow path with a circular cross section.

Specifically, the second housing portion 54b has a cylindrical shape with a third axis A3 as the center. The third axis A3 is an imaginary line. The third axis A3 extends in the longitudinal direction X.

The second housing portion 54b has a diameter D5. The diameter D5 is constant along the third axis A3. The diameter D5 is substantially equal to the diameter D2 of the first housing portion 34d, for example.

The third pipe 53 has a rear portion 54c. The rear portion 54c extends rearward from the second housing portion 54b.

The rear portion 54c does not house the second catalyst 55. The rear portion 54c is located more rearward than the second catalyst 55. The entire of the rear portion 54c is located more rearward than the second catalyst 55.

The rear portion 54c has a cylindrical shape extending in the longitudinal direction X. Specifically, the rear portion 54c has a cylindrical shape with the third axis A3 as the center. The rear portion 54c has a flow path with a circular cross section.

The rear portion 54c has a diameter D6. The diameter D6 is constant along the third axis A3. The diameter D6 is substantially equal to the diameter D5.

The rear end 53b of the third pipe 53 corresponds to the rear end of the rear portion 54c.

Reference is made to Fig. 4. The following describes the second catalyst 55. The second catalyst 55 is installed inside of the second housing portion 54b. The second catalyst 55 is installed in the flow path of the second housing portion 54b.

The second catalyst 55 is located more forward than the rear axle 14. The entire of the second catalyst 55 is located more forward than the rear axle 14. The entire of the second catalyst 55 is located more forward than the entire of the rear axle 14.

The second catalyst 55 has a front face 55a, a rear face 55b, and an outer circumferential face 55c. The front face 55a is positioned at the front end of the second housing portion 54b. The front face 55a has a size substantially equal to a cross section of the flow path of the second housing portion 54b. The front face 55a extends to an inner circumference face of the second housing portion 54b. The front face 55a contacts the inner circumference face of the second housing portion 54b. The rear face 55b is positioned at the rear end of the second housing portion 54b. The rear face 55b has a size substantially equal to the cross section of the flow path of the second housing portion 54b. The rear face 55b extends to the inner circumference face of the second housing portion 54b. The rear face 55b contacts the inner circumference face of the second housing portion 54b. The outer circumferential face 55c extends from the front face 55a to the rear face 55b. The outer circumferential face 55c contacts the inner circumference face of the second housing portion 54b.

Exhaust gases enter the second catalyst 55 through the front face 55a. Exhaust gases exit from the second catalyst 55 through the rear face 55b. The exhaust gases do not pass through the outer circumferential face 55c.

The second catalyst 55 is located above the first catalyst 35 in the side view of the vehicle.

The front face 55a of the second catalyst 55 is located more rearward than the front face 35a of the first catalyst 35 and more forward than the rear face 35b of the first catalyst 35.

The following describes the casing 57. The casing 57 is supported by the third pipe 53. The casing 57 is supported by the reduced portion 54a.

The casing 57 extends rearward from the reduced portion 54a. The casing 57 extends to a position more rearward than the third pipe 53. The casing 57 houses the rear end 53b of the third pipe 53.

The casing 57 has a cylindrical shape extending in the longitudinal direction X.

More specifically, the casing 57 includes a circumferential member 58 and a second lid member 59. The circumferential member 58 has a cylindrical shape. The circumferential member 58 has a front end 58a and a rear end 58b. The front end 58a is coupled to the reduced portion 54a. The front end 58a is tightly attached to the outer circumferential face of the reduced portion 54a. The rear end 58b is located more rearward than the front end 58a. The rear end 58b is located more rearward than the third pipe 53. The second lid member 59 is attached to the rear end 58b of the circumferential member 58. The second lid member 59 is tightly attached to the rear end 58b. The second lid member 59 closes the rear end 58b.

The second expansion chamber B2 is positioned behind the partition wall 61. The second expansion chamber B2 is positioned in front of the second lid member 59. The third expansion chamber B3 is positioned in front of the partition wall 61. The third expansion chamber B3 is positioned in front of the second expansion chamber B2. The third expansion chamber B3 is positioned behind the reduced portion 54a.

The partition wall 61 has a plate shape. The partition wall 61 extends perpendicularly with respect to the longitudinal direction X.

The partition wall 61 is located more rearward than the front end 58a of the circumferential member 58 and more forward than the rear end 58b of the circumferential member 58. The partition wall 61 is located more rearward than the reduced portion 54a of the third pipe 53 and more forward than the rear end 53b of the third pipe 53. The partition wall 61 is coupled to the circumferential member 58. The partition wall 61 is tightly attached to an inner circumference face of the circumferential member 58.

The third pipe 53 passes through the third expansion chamber B3. The third pipe 53 penetrates the partition wall 61. The third pipe 53 extends to the second expansion chamber B2. The rear end 53b of the third pipe 53 is positioned in the second expansion chamber B2. The rear end 53b of the third pipe 53 is opened to the second expansion chamber B2.

Reference is made to Fig. 5. The fourth pipe 63 is arranged inside of the casing 57. The fourth pipe 63 extends from the second expansion chamber B2 to the third expansion chamber B3. The fourth pipe 63 penetrates the partition wall 61. The fourth pipe 63 extends in the longitudinal direction X, for example. The rear end of the fourth pipe 63 is opened to the second expansion chamber B2. The front end of the fourth pipe 63 is opened to the third expansion chamber B3.

Part of the fifth pipe 65 is arranged inside of the casing 57. Other part of the fifth pipe 65 is arranged outside of the casing 57. The outside of the casing 57 corresponds to the outside of the scooter type vehicle 1. The fifth pipe 65 extends rearward from the third expansion chamber B3. The fifth pipe 65 penetrates the partition wall 61. The fifth pipe 65 passes through the second expansion chamber B2. The fifth pipe 65 penetrates the second lid member 59. The fifth pipe 65 extends to a position more rearward than the second lid member 59. The front end of the fifth pipe 65 is opened to the third expansion chamber B3. The rear end of the fifth pipe 65 is opened to the outside of the scooter type vehicle 1.

Reference is made to Fig. 7. Fig. 7 shows the second catalyst 55 with dotted lines. The second catalyst 55 overlaps the first catalyst 35 in the plan view of the vehicle. At least part of the second catalyst 55 overlaps the first catalyst 35 in the plan view of the vehicle. Specifically, part of the second catalyst 55 overlaps part of the first catalyst 35 in the plan view of the vehicle.

The first catalyst 35 is positioned more rightward than the engine 12, which illustration is omitted. The entire of the first catalyst 35 is positioned more rightward than the engine 12. The entire of the first catalyst 35 is positioned more rightward than the entire of the engine 12. The first catalyst 35 has no portion located below the engine 12. The first catalyst 35 has no portion that overlaps the engine 12 in the plan view of the vehicle. The second catalyst 55 is positioned more rightward than the engine 12. The entire of the second catalyst 55 is positioned more rightward than the engine 12. The entire of the second catalyst 55 is positioned more rightward than the entire of the engine 12. The second catalyst 55 has no portion located below the engine 12. The second catalyst 55 has no portion that overlaps the engine 12 in the plan view of the vehicle.

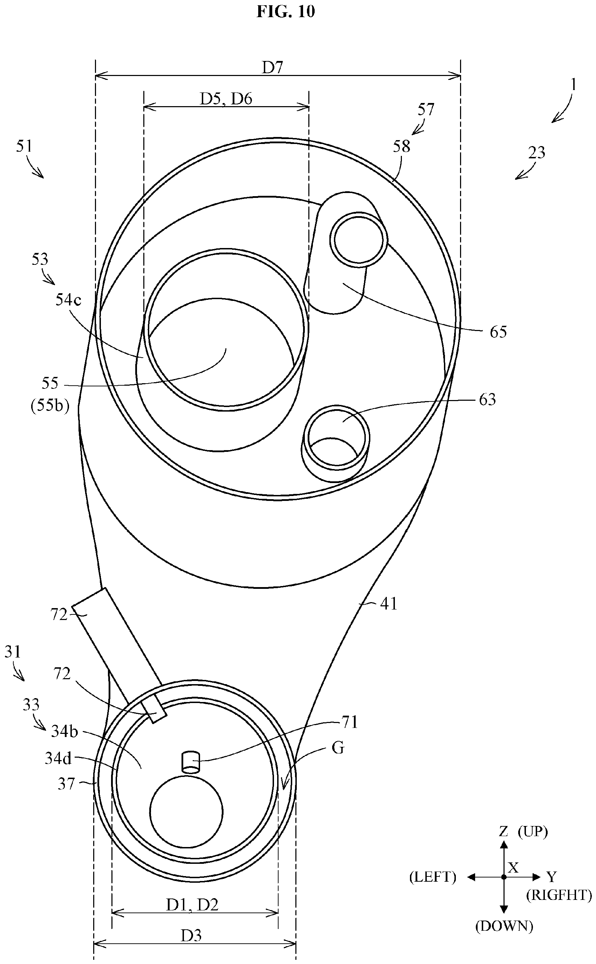

Fig. 10 is a rear view of the interior of the muffler 23. Fig. 10 omits illustration of the first lid member 39, the first catalyst 35 and the second lid member 59. The third pipe 53 is located at a position shifted more leftward than the center of the casing 57 in the rear view of the vehicle. The fourth pipe 63 and the fifth pipe 65 are each located more rightward than the third pipe 53. The fifth pipe 65 is located higher than the fourth pipe 63.

The casing 57 has a diameter D7. The diameter D7 corresponds to a diameter of the circumferential member 58. The diameter D7 is larger than the diameter D5 of the second housing portion 54b. The diameter D7 is, for example, twice or more as large as the diameter D5.

The diameter D7 is larger than the diameter D6 of the rear portion 54c. The diameter D7 is, for example, twice or more as large as the diameter D6.

The diameter D7 is larger than the diameter D3 of the second pipe 37. The diameter D7 is, for example, 1.5 times or more as large as the diameter D3.

The diameter D7 is substantially equal to the diameter D4 of the second end 41b of the connecting portion 41, for example.

Reference is made to Fig. 4. The oxygen sensor 71 is installed in the upstream of the first catalyst 35. The exhaust gases pass through the oxygen sensor 71 before entering the first catalyst 35. The oxygen sensor 71 detects an oxygen concentration of exhaust gases in the upstream of the first catalyst 35.

Specifically, the oxygen sensor 71 is attached to the first pipe 33. The oxygen sensor 71 is attached to the enlarged portion 34b. The oxygen sensor 71 is located more forward than the first catalyst 35. The oxygen sensor 71 is located more forward than the second pipe 37. Part of the oxygen sensor 71 is exposed to the flow path of the enlarged portion 34b. The oxygen sensor 71 detects the oxygen concentration of exhaust gases in the flow path of the enlarged portion 34b.

The oxygen sensor 72 is installed in the downstream of the first catalyst 35. The entire of the oxygen sensor 72 is located downstream the entire of the first catalyst 35. The exhaust gases pass through the oxygen sensor 72 after exiting from the first catalyst 35. The oxygen sensor 72 detects an oxygen concentration of exhaust gases in the downstream of the first catalyst 35.

More specifically, the oxygen sensor 72 is arranged downstream of the first catalyst 35 and upstream of the second catalyst 55. The exhaust gases pass through the oxygen sensor 72 after exiting from the first catalyst 35 and before entering the second catalyst 55. The oxygen sensor 72 detects the oxygen concentration of exhaust gases in the downstream of the first catalyst 35 and upstream of the second catalyst 55.

Specifically, the oxygen sensor 72 is attached to the second pipe 37. The oxygen sensor 72 is located more rearward than the first pipe 33. The oxygen sensor 72 is located more rearward than the first catalyst 35. Part of the oxygen sensor 72 is exposed to the rear space H. The oxygen sensor 72 detects the oxygen concentration of exhaust gases in the rear space H.

The oxygen sensor 71 is one example of an upstream oxygen sensor in the present invention. The oxygen sensor 72 is one example of a downstream oxygen sensor in the present invention.

The stay 81 is fixed to the second pipe 37. The stay 81 extends downward from the second pipe 37.

The stay 81 is located below the first catalyst 35 in side view of the vehicle. At least part of the stay 81 is located more rearward than the front face 35a of the first catalyst 35 and more forward than the rear face 35b of the first catalyst 35.

The stay 81 is located below the first housing portion 34d in the side view of the vehicle. At least part of the stay 81 is located more rearward than the front end of the first housing portion 34d and more forward than the rear end of the first housing portion 34d.

The stay 81 is located below the connecting portion 41 in the side view of the vehicle.

The stay 82 extends upward from the connecting portion 41.

The stay 83 is fixed to the casing 57. The stay 83 is fixed to the circumferential member 58. The stay 81 extends downward from the casing 57.

The stay 83 is located below the second catalyst 55 in the side view of the vehicle. At least part of the stay 83 is located more rearward than the front face 55a of the second catalyst 55 and more forward than the rear face 55b of the second catalyst 55.

The stay 83 is located below the second housing portion 54b in the side view of the vehicle. At least part of the stay 83 is located more rearward than the front end of the second housing portion 54b and more forward than the rear end of the second housing portion 54b.

The stays 81, 82, and 83 are arranged in substantially a triangle shape in the side view of the vehicle. The stay 81 is located lower than the stays 82 and 83. The stay 82 is located more forward than the stays 81 and 83. The stay 83 is located more rearward than the stays 81 and 82.

The scooter type vehicle 1 includes the handlebar 3 and the seat 6. The seat 6 is located more rearward than the handlebar 3. The scooter type vehicle 1 forms the recessed space F. The recessed space F is positioned more rearward than the handlebar 3 and more forward than the seat 6 in the side view of the vehicle. The recessed space F is dented downward. Consequently, a driver of the scooter type vehicle 1 can get on and off the scooter type vehicle 1 easily with use of the recessed space F.

The scooter type vehicle 1 includes the engine 12, the exhaust pipe 21, the muffler 23, and the rear wheel 15. The exhaust pipe 21 is connected to the engine 12. The muffler 23 is connected to the exhaust pipe 21. The muffler 23 is positioned more rightward than the rear wheel 15. At least part of the muffler 23 overlaps the rear wheel 15 in the side view of the vehicle. In other words, the muffler 23 is not located below the engine 12. Accordingly, the muffler 23 never interferes with the engine 12 even if a height position of the engine 12 is made low. Consequently, it is easy to make the height position of the engine 12 low.

The muffler 23 includes the first unit 31, the connecting portion 41, and the second unit 51. The first unit 31 is connected to the exhaust pipe 21. The connecting portion 41 is connected to the first unit 31. The second unit 51 is connected to the connecting portion 41.

The first unit 31 includes the first pipe 33, the first catalyst 35, the second pipe 37, and the first lid member 39. The first pipe 33 is connected to the exhaust pipe 21. The first pipe 33 extends rearward from the exhaust pipe 21. The first catalyst 35 is arranged inside of the first pipe 33. Specifically, the first pipe 33 has the first housing portion 34d. The first housing portion 34d accommodates the first catalyst 35. The first catalyst 35 is arranged inside of the first housing portion 34d. The second pipe 37 is located outward of the first pipe 33. That is, the second pipe 37 accommodates a part of the first pipe 33. The first pipe 33 and the second pipe 37 form a double pipe structure. The second pipe 37 extends to a position more rearward than the first pipe 33. The second pipe 37 has the rear end 37b. The first lid member 39 is attached to the rear end 37b. The first lid member 39 closes the rear end 37b. The first lid member 39 introduces the exhaust gases, exhausted from the first pipe 33, into the gap G. The gap G is formed outward of the first pipe 33 and inward of the second pipe 37. The connecting portion 41 is in communication with the gap G. When flowing in the gap G, the exhaust gases apply heat from the gap G to the first catalyst 35. Accordingly, the first catalyst 35 is activated rapidly.

The second pipe 37 has the outer circumferential face 37c. The connecting portion 41 is connected to the outer circumferential face 37c. In other words, the connecting portion 41 is not connected to the rear end 37b of the second pipe 37. The rear end 37b of the second pipe 37 does not support the connecting portion 41. The connecting portion 41 is not connected to the first lid member 39. The first lid member 39 does not support the connecting portion 41. Accordingly, the second pipe 37 is hard to bend. The first lid member 39 is also hard to bend. Consequently, the second pipe 37 does not need an excessively high strength. Also, the first lid member 39 does not need an excessively high strength. As a result, the second pipe 37 can support the connecting portion 41 rigidly. The muffler 23 has high rigidity.

Moreover, it is easy to make the entire of the first unit 31 and the connecting portion 41 short in the longitudinal direction X. For example, it is easy to locate the entire of the connecting portion 41 more forward than the rear end 37b of the second pipe 37. For example, it is easy to locate the entire of the connecting portion 41 more forward than the first lid member 39. Consequently, it is easy to reduce the size of the muffler 23. For example, it is easy to make the muffler 23 short in the longitudinal direction X.

As described above, the first unit 31 has the double pipe structure. The second pipe 37 rigidly supports the connecting portion 41 even when the first unit 31 has the double pipe structure. That is because the connecting portion 41 is connected to the outer circumferential face 37c of the second pipe 37. Rather, such a configuration where the connecting portion 41 is connected to the outer circumferential face 37c of the second pipe 37 is significantly usable when the first unit 31 has the double pipe structure.

As described above, the muffler 23 according to the scooter type vehicle 1 is rigid and compact. Moreover, the muffler 23 activates the first catalyst 35 rapidly.

The scooter type vehicle 1 includes the center cover 7. At least part of the center cover 7 is located more rearward than the handlebar 3 and more forward than the seat 6. The center cover 7 forms the recessed space F above the center cover 7 in the side view of the vehicle. Consequently, the recessed space F can be formed suitably.

The connecting portion 41 has the first end 41a. The first end 41a is connected to the first unit 31. The entire of the first end 41a contacts the upper part 37c1 of the outer circumferential face 37c. The connecting portion 41 extends upward from the upper part 37c1. Accordingly, the second pipe 37 can support the connecting portion 41 more rigidly.

The first end 41a extends from a position more forward than the front face 35a of the first catalyst 35 to a position more rearward than the front face 35a of the first catalyst 35. The first end 41a extends to a position more forward than the front face 35a of the first catalyst 35. Accordingly, when flowing in the gap G, the exhaust gases suitably apply heat from the gap G to the first catalyst 35. Moreover, the first end 41a extends to a position more rearward than the front face 35a of the first catalyst 35. That is, the first end 41a overlaps the first catalyst 35 in the longitudinal direction X. More specifically, the area in the longitudinal direction X where the first end 41a is positioned overlaps the area in the longitudinal direction X where the first catalyst 35 is positioned. The front end of the first end 41a is located more forward than the front face 35a of the first catalyst 35. The rear end of the first end 41a is located more rearward than the front face 35a of the first catalyst 35. Here, the first catalyst 35 is relatively heavy among the members of the first unit 31. Accordingly, the first catalyst 35 is positioned near the center of gravity of the first unit 31. The first end 41a is also positioned near the center of gravity of the first unit 31. As a result, the second pipe 37 can support the connecting portion 41 suitably.

The entire of the connecting portion 41 is located more forward than the first lid member 39. That is, the connecting portion 41 has no portion positioned more rearward than the lid member 39. Accordingly, the entire of the first unit 31 and the connecting portion 41 is short in the longitudinal direction X. As a result, it is easier to reduce the size of the muffler 23. For example, it is easier to make the muffler 23 short in the longitudinal direction X.

The entire of the connecting portion 41 is located more rearward than the front end 31a of the first unit 31. That is, the connecting portion 41 has no portion positioned more forward than the first unit 31. Accordingly, the entire of the first unit 31 and the connecting portion 41 is shorter in the longitudinal direction X. As a result, it is easier to reduce the size of the muffler 23.

The entire length of the first unit 31 and the connecting portion 41 in the longitudinal direction X is equal to the length J1 of the first unit 31 in the longitudinal direction X. Accordingly, the entire of the first unit 31 and the connecting portion 41 is shorter in the longitudinal direction X. As a result, it is easier to reduce the size of the muffler 23.

The entire of the connecting portion 41 is located more forward than the rear face 35b of the first catalyst 35. As a result, it is easier to reduce the size of the muffler. For example, it is easier to make the muffler 23 short in the longitudinal direction X.

The muffler 23 includes the stay 82. The stay 82 is fixed to the connecting portion 41. The stay 82 supports the connecting portion 41. Accordingly, the connecting portion 41 is supported more rigidly. As a result, the muffler 23 has much high rigidity.

The entire of the first unit 31 is located more forward than the rear axle 14. Accordingly, the first unit 31 is compact. Consequently, it is easy to reduce the size of the muffler 23.

The first pipe 33 has the front part 34c. The front part 34c extends forward from the first housing portion 34d. The front part 34c has the flow path. The flow path of the front part 34c has a size equal to or larger than the first catalyst 35. The exhaust gases flow from the front part 34c to the first housing portion 34d. In other words, the exhaust gases flow from the front part 34c to the first catalyst 35. Here, temperatures of exhaust gases decrease slightly when the exhaust gases flow in the flow path of the front part 34c. That is because the flow path of the front part 34c has a size equal to or larger than the first catalyst 35. This prevents the first catalyst 35 from having excessively high temperatures. Specifically, the first catalyst 35 heated with the exhaust gases has the maximum temperature that is not excessively high. In other words, when the first catalyst 35 is heated with the exhaust gases, the maximum temperature of the first catalyst 35 is not excessively high. Accordingly, the life of the first catalyst 35 increases suitably. In other words, durability of the first catalyst 35 is suitably improved. As a result, both shortening an activating time of the first catalyst 35 and prolonging the life of the first catalyst 35 can be obtained suitably.

As described above, the maximum temperature of the first catalyst 35 is suppressed by the front part 34c. Accordingly, it is allowable to locate the first catalyst 35 near the engine 12. For example, it is allowable to locate the entire of the first catalyst 35 more forward than the rear axle 14. The maximum temperature of the first catalyst 35 is suppressed by the front part 34c even when the entire of the first catalyst 35 is located more forward than the rear axle 14. As a result, the life of the first catalyst 35 is prolonged suitably even when the entire of the first catalyst 35 is located more forward than the rear axle 14. Moreover, arrangement of the first catalyst 35 near the engine 12 can reduce the size the muffler 23 suitably.

The muffler 23 includes the oxygen sensor 72. The oxygen sensor 72 is attached to the second pipe 37. Consequently, it is easy to provide the oxygen sensor 72. There is no need to make the muffler 23 large for providing the oxygen sensor 72.

The oxygen sensor 72 is located more rearward than the first pipe 33. As a result, it is easier to locate the oxygen sensor 72. There is no need to make the muffler 23 large for providing the oxygen sensor 72.

The connecting portion 41 includes the first expansion chamber B1. The first expansion chamber B1 is formed inside of the connecting portion 41. The exhaust gases expand in the first expansion chamber B1. Expansion of the exhaust gases in the first expansion chamber B1 promotes flow of the exhaust gases from the gap G to the connecting portion 41. Expansion of the exhaust gases in the first expansion chamber B1 promotes flow of the exhaust gases from the first pipe 33 to the gap G. Accordingly, the exhaust gases flow smoothly from the first pipe 33 to the gap G. The exhaust gases flow smoothly from the gap G to the connecting portion 41. The exhaust gases are hard to stagnate in the gap G. As a result, heat is transmitted from the gap G to the first catalyst 35 effectively. The heat of the exhaust gases is transmitted from the gap G to the first catalyst 35 effectively. Accordingly, the first catalyst 35 is activated effectively.

The connecting portion 41 has the second end 41b. The second end 41b is connected to the second unit 51. The second end 41b has the diameter D4. The diameter D4 is at least twice as large as the diameter D2 of the first housing portion 34d. Accordingly, the connecting portion 41 expands the exhaust gases suitably.

The second unit 51 extends rearward from the connecting portion 41. The length J1 corresponds to a length of the first unit 31 in the longitudinal direction X. The length J2 corresponds to a length of the second unit 51 in the longitudinal direction X. The length J2 is smaller than the length J1. Accordingly, the second unit 51 is relatively short in the longitudinal direction X. Accordingly, the muffler 23 is made more compact.

The second unit 51 includes the third pipe 53 and the second catalyst 55. The third pipe 53 is connected to the connecting portion 41. The second catalyst 55 is arranged inside of the third pipe 53. The second catalyst 55 overlaps the first catalyst 35 in the plan view of the vehicle. Accordingly, even when the muffler 23 includes the second catalyst 55 in addition to the first catalyst 35, it is easy to make the muffler 23 short in the longitudinal direction X. As a result, even when the muffler 23 includes the second catalyst 55 in addition to the first catalyst 35, it is easy to make the muffler 23 small.

As described above, the second catalyst 55 overlaps the first catalyst 35 in the plan view of the vehicle. Accordingly, even when the muffler 23 includes the second catalyst 55 in addition to the first catalyst 35, it is easy to make the muffler 23 with high rigidity.

The entire of the first catalyst 35 is located more forward than the rear axle 14. The entire of the second catalyst 55 is located more forward than the rear axle 14. Accordingly, it is easier to make the muffler 23 short in the longitudinal direction X. As a result, it is easier to reduce the size of the muffler 23.

The third pipe 53 extends rearward from the connecting portion 41. The third pipe 53 has the front end 53a. The connecting portion 41 is connected to the front end 53a. That is, the connecting portion 41 is not connected to the outer circumferential face of the third pipe 53. The connecting portion 41 is not connected to the rear end 53b of the third pipe 53. Accordingly, it is easy to make the third pipe 53 short in the longitudinal direction X. Consequently, it is easy to make the second unit 51 short in the longitudinal direction X. As a result, it is easier to reduce the size of the muffler 23.

The second unit 51 includes the casing 57. The casing 57 accommodates the third pipe 53. The casing 57 includes the second expansion chamber B2. The second expansion chamber B2 is formed inside of the casing 57. The third pipe 53 is opened to the second expansion chamber B2. The exhaust gases flow from third pipe 53 to the second expansion chamber B2. The exhaust gases expand in the second expansion chamber B2. In such a manner as above, the second unit 51 expands the exhaust gases suitably.

The casing 57 has a cylindrical shape extending in the longitudinal direction X. The third pipe 53 has the second housing portion 54b. The second housing portion 54b accommodates the second catalyst 55. The casing 57 has the diameter D7. The diameter D7 is at least twice as large as the diameter D5 of the second housing portion 54b. The diameter D7 is at least 1.5 times as large as the diameter D3 of the second pipe 37. Thus, the diameter D7 of the casing 57 is relatively large. Accordingly, even when the casing 57 includes the second expansion chamber B2, it is easy to make the casing 57 short in the longitudinal direction X. Consequently, it is easy to make the second unit 51 short in the longitudinal direction X. As a result, it is easier to reduce the size of the muffler 23.

The scooter type vehicle 1 includes the fuel tank 11. The fuel tank 11 includes the upper end 11t. At least part of the seat 6 is located higher than the upper end 11t. Accordingly, the fuel tank 11 allows the center cover 7 to form the recessed space F. In other words, the fuel tank 11 does not prevent the center cover 7 from forming the recessed space F. Consequently, the center cover 7 can form the recessed space F suitably.

### 9. Modification

This invention is not limited to the foregoing embodiment, but may be modified as follows.
(1) In the embodiment, the muffler 23 is positioned more rightward than the rear wheel 15. However, the present invention is not limited to this. The muffler 23 may be positioned more leftward than the rear wheel 15. The entire of the muffler 23 may be positioned more leftward than the rear wheel 15. The entire of the muffler 23 may be positioned more leftward than the entire of the rear wheel 15. Even when the muffler 23 is positioned more leftward than the rear wheel 15, at least part of the muffler 23 overlaps the rear wheel 15 in the side view of the vehicle.
(2) In the present embodiment, the second pipe 37 houses a part of the first pipe 33. However, the present invention is not limited to this. The second pipe 37 may house the entire of the first pipe 33.
(3) In the present embodiment, the oxygen sensor 72 is attached to the second pipe 37. However, the present invention is not limited to this. The arrangement of the oxygen sensor 72 may be changed as appropriate.

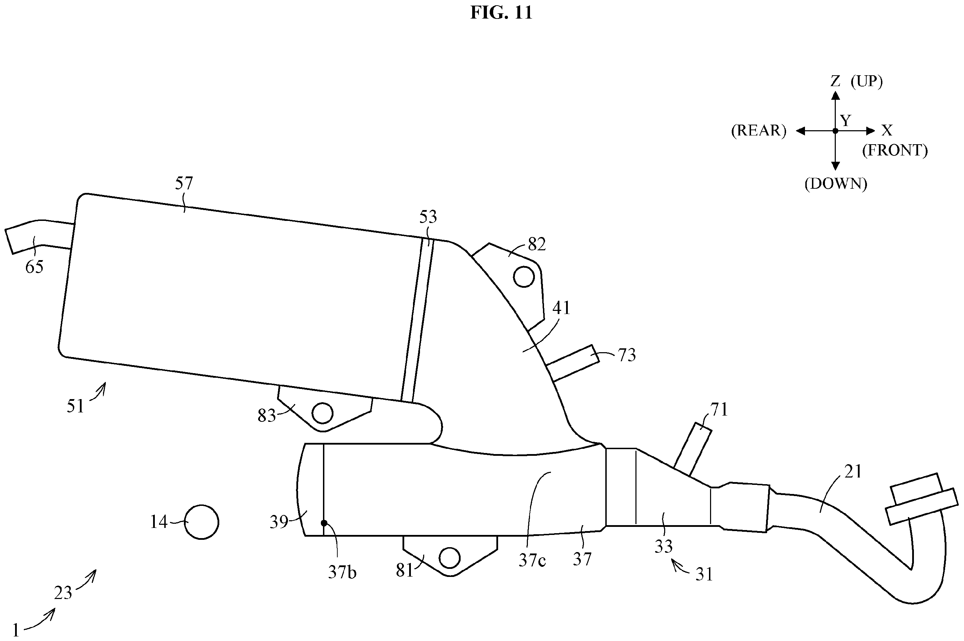

Fig. 11 is a right side view of a muffler 23 according to one modification. Like numerals are used to identify like components which are the same as those in the present embodiment, and the components will not particularly be described.

The muffler 23 includes an oxygen sensor 73 instead of the oxygen sensor 72. The oxygen sensor 73 is arranged downstream of the first catalyst 35. The entire of the oxygen sensor 73 is located downstream the entire of the first catalyst 35. The exhaust gases pass through the oxygen sensor 73 after exiting from the first catalyst 35. The oxygen sensor 73 detects an oxygen concentration of exhaust gases downstream of the first catalyst 35.

More specifically, the oxygen sensor 73 is arranged downstream of the first catalyst 35 and upstream of the second catalyst 55. The exhaust gases pass through the oxygen sensor 73 after exiting from the first catalyst 35 and before entering the second catalyst 55. The oxygen sensor 73 detects the oxygen concentration of exhaust gases downstream of the first catalyst 35 and upstream of the second catalyst 55.

Specifically, the oxygen sensor 73 is attached to the connecting portion 41. Part of the oxygen sensor 73 is exposed to the flow path of the connecting portion 41. The oxygen sensor 73 detects the oxygen concentration of exhaust gases in the flow path of the connecting portion 41. Part of the oxygen sensor 73 is exposed to the first expansion chamber B1. The oxygen sensor 73 detects the oxygen concentration of exhaust gases in the flow path of the first expansion chamber B1.

According to this modification, it is easy to locate the oxygen sensor 73. Consequently, there is no need to make the muffler 23 large for providing the oxygen sensor 73.

The oxygen sensor 73 is one example of the downstream oxygen sensor in the present invention.

(4) In the present embodiment, the second unit 51 is located above the first unit 31. However, the present invention is not limited to this. The second unit 51 may be located below the first unit 31.

In the present modification, it is preferred that the connecting portion 41 extends downward from the outer circumferential face 37c of the second pipe 37. The first end 41a of the connecting portion 41 preferably contacts the lower part 37c2 of the outer circumferential face 37c.

(5) In the present embodiment, the connecting portion 41 includes the first expansion chamber B1. However, the present invention is not limited to this. The first expansion chamber B1 may be omitted.

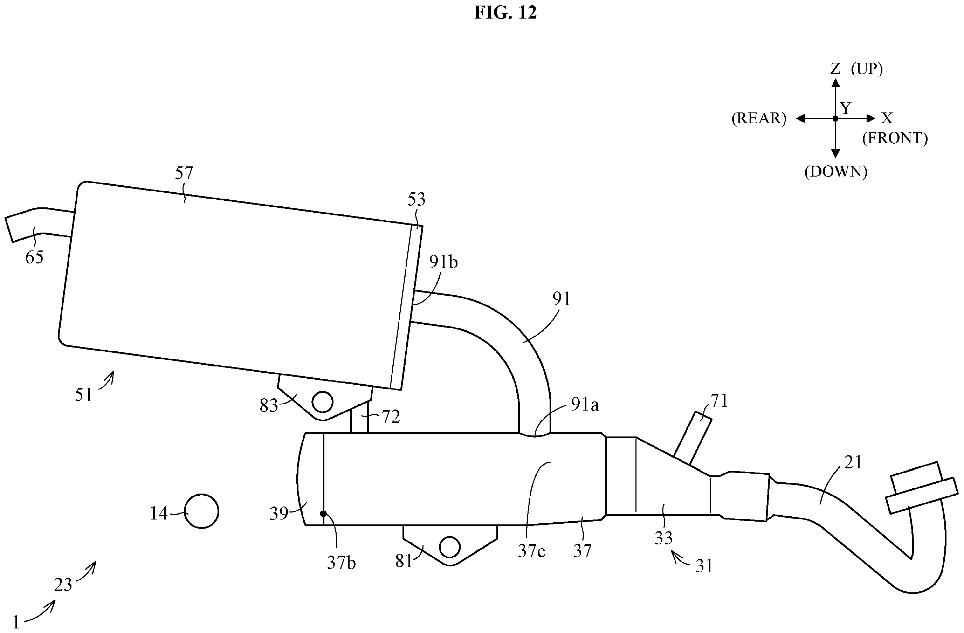

Fig. 12 is a right side view of a muffler 23 according to another modification. Like numerals are used to identify like components which are the same as those in the present embodiment, and the components will not particularly be described.

The scooter type vehicle 1 includes a connecting portion 91 instead of the connecting portion 41. The connecting portion 91 is connected to the first unit 31. The connecting portion 91 is connected to the outer circumferential face 37c of the second pipe 37. The connecting portion 91 is connected to the second unit 51.

The connecting portion 91 does not include the first expansion chamber B1.

The connecting portion 91 has a first end 91a and a second end 91b. The first end 91a is connected to the first unit 31. The second end 91b is connected to the second unit 51. The connecting portion 91 has a curved tubular shape. The connecting portion 91 has a constant diameter from the first end 91a to the second end 91b. The connecting portion 91 has a flow path that is constant from the first end 91a to the second end 91b. The flow path of the connecting portion 91 has a size that is constant from the first end 91a to the second end 91b. The flow path of the connecting portion 91 does not expand from the first end 91a toward the second end 91b.

The diameter of the connecting portion 91 is relatively small. For example, the diameter of the connecting portion 91 is smaller than the diameter D3 of the second pipe 37. For example, the diameter of the connecting portion 91 is smaller than the diameter D2 of the first housing portion 34d. For example, the diameter of the connecting portion 91 is smaller than the diameter D1 of the front part 34c. For example, the diameter of the connecting portion 91 is substantially equal to the diameter of the exhaust pipe 21.

(6) In the present embodiment, the second pipe 37 and the connecting portion 41 are formed with the first member 45, the second member 47, and the third member 49. However, the present invention is not limited to this. The members constituting the second pipe 37 may be changed as appropriate. The members constituting the connecting portion 41 may be changed as appropriate. For example, the second pipe 37 may be composed of an inseparable single member. For example, the connecting portion 41 may be composed of an inseparable single member. For example, the connecting portion 41 and the second pipe 37 may be formed with an inseparable single member.

(7) In the present embodiment, the casing 57 is supported by the third pipe 53. However, the present invention is not limited to this. The casing 57 may be supported by the connecting portion 41. The casing 57 may be connected to the connecting portion 41.

(8) In the present embodiment, the engine 12 is classified as a unit swing type engine. The engine 12 is swingable relative to the body frame. However, the present invention is not limited to this. For example, the engine 12 may be classified as a rigid mount engine. The engine 12 may be fixed to the body frame. For example, the engine 12 may be unable to swing relative to the body frame.

In the present modification, the rear arm 13 may be supported by the body frame, for example. In this case, the rear arm 13 is swingable relative to the body frame. Alternatively, the rear arm 13 may be supported by the engine 12, for example. In this case, the rear arm 13 is swingable relative to the body frame and the engine 12.

In the present modification, the exhaust pipe 21 is not swingable relative to the body frame. The muffler 23 is also not swingable relative to the body frame. The stays 81, 82, and 83 are supported by the body frame, for example. The stays 81, 82, and 83 are fastened to the body frame, for example.

(9) In the present embodiment, the center cover 7 is located higher than the foot board 8. However, the present invention is not limited to this. For example, the center cover 7 may be located at substantially the same height position as the foot board 8. For example, the center cover 7 may extend substantially horizontally from the right foot board 8R to the left foot board. In the present modification, the foot board 8 forms a recessed space F above the foot board 8 in the side view of the vehicle. Consequently, the recessed space F is formed suitably. Moreover, in the present modification, the recessed space F extends downward to a height position substantially the same as the foot board 8. That is, in the present modification, the recessed space F extends downward to a much lower position. The center cover 7 and the foot board 8 each contact a bottom of the recessed space F in the side view of the vehicle. Consequently, a driver can get on and off the scooter type vehicle 1 more easily.

(10) In the present embodiment, the scooter type vehicle 1 includes the center cover 7. The foot board 8 includes the right foot board 8R and the left foot board. However, the present invention is not limited to this. The center cover 7 may be omitted. The foot board 8 may be composed of a flat foot board (not shown). Specifically, the flat foot board has a substantially horizontal plate shape. The flat board is large enough for driver's feet to be placed on the flat foot board. Specifically, the flat foot board extends in the transverse direction Y. The flat foot board has a length in the transverse direction Y that is long enough for driver's feet to be placed on the flat foot board. For example, the flat foot board extends from a right end of the scooter type vehicle 1 to a left end of the scooter type vehicle 1. In the present modification, the flat foot board forms a recessed space F above the flat foot board in the side view of the vehicle. Consequently, the recessed space F is formed suitably. Moreover, in the present modification, the recessed space F extends downward to a height position substantially the same as the flat foot board. That is, in the present modification, the recessed space F extends downward to a much lower position. The flat foot board contacts the bottom of the recessed space F in the side view of the vehicle. Consequently, a driver can get on and off the scooter type vehicle 1 more easily.

(11) In the present embodiment, the number of front wheels 5 is one. However, the present invention is not limited to this. The number of front wheels 5 may be two. In the present embodiment, the number of rear wheels 15 is one. The present invention is not limited to this. The number of rear wheels 15 may be two.

(12) The foregoing embodiment and each of the modified embodiments described in paragraphs (1) to (11) above may be further varied as appropriate by replacing or combining their constructions with the constructions of the other modified embodiments.

## Claims

1. A scooter type vehicle (1), comprising:
a handlebar (3);
a seat (6) located more rearward than the handlebar (3);
an engine (12);
an exhaust pipe (21) connected to the engine (12);
a muffler (23) connected to the exhaust pipe (21); and
a rear wheel (15), wherein
the scooter type vehicle (1) forms a recessed space (F) located more rearward than the handlebar (3) and more forward than the seat (6), and recessed downward in side view of the scooter type vehicle (1),
the muffler (23) is located at either a position more rightward than the rear wheel (15) or a position more leftward than the rear wheel (15),
at least part of the muffler (23) overlaps the rear wheel (15) in the side view of the scooter type vehicle (1),
the muffler (23) includes:
a first unit (31) connected to the exhaust pipe (21);
a connecting portion (41) connected to the first unit (31); and
a second unit (51) connected to the connecting portion (41),
the first unit (31) includes:
a first pipe (33) connected to the exhaust pipe (21) and extending rearward from the exhaust pipe (21);
a first catalyst (35) arranged inside of the first pipe (33);
a second pipe (37) arranged outward of the first pipe (33) and extending to a position more rearward than the first pipe (33); and
a lid member (39) attached to a rear end (37b) of the second pipe (37) to close the rear end (37b) of the second pipe (37), and introducing exhaust gases, exhausted from the first pipe (33), into a gap (G) formed outward of the first pipe (33) and inward of the second pipe (37),
the first pipe (33) has a first housing portion (34d) configured to house the first catalyst (35);
**characterized in that**:
the connecting portion (41) is connected to an outer circumferential face (37c) of the second pipe (37) and is in communication with the gap (G);
the first pipe (33) has a rear end (33b) opened to the inside of the second pipe 37, and
the exhaust gases flow from the gap (G) to the connecting portion (41).

2. The scooter type vehicle (1) according to claim 1, wherein
the connecting portion (41) has a first end (41a) connected to the first unit (31),
the first end (41a) of the connecting portion (41) entirely contacts an upper part (37c1) of the outer circumferential face (37c) of the second pipe (37c), and
the connecting portion (41) extends upward from the upper part (37c1) of the outer circumferential face (37c) of the second pipe (37).

3. The scooter type vehicle (1) according to claim 1 or 2, wherein
the first end (41a) of the connecting portion (41) extends from a position more forward than a front face (35a) of the first catalyst (35) to a position more rearward than the front face (35a) of the first catalyst (35).

4. The scooter type vehicle (1) according to any of claims 1 to 3, wherein
the connecting portion (41) is entirely located more forward than the lid member (39).

5. The scooter type vehicle (1) according to any of claims 1 to 4, wherein
the connecting portion (41) is entirely located more forward than a rear face (35b) of the first catalyst (35).

6. The scooter type vehicle (1) according to any of claims 1 to 5, wherein
the muffler (23) includes:
a first stay (82) fixed to the connecting portion (41) and configured to support the connecting portion (41).

7. The scooter type vehicle (1) according to any of claims 1 to 6, wherein
the first pipe (33) further has a front part (34c) extending forward from the first housing portion (34d), and
the front part (34c) includes a flow path having a size equal to or larger than the first catalyst (35).

8. The scooter type vehicle (1) according to any of claims 1 to 7, wherein
the muffler (23) includes a downstream oxygen sensor (72, 73) located downstream of the first catalyst (35), and
the downstream oxygen sensor (72, 73) is attached to either the second pipe (37) or the connecting portion (41).

9. The scooter type vehicle (1) according to any of claims 1 to 8, wherein
the connecting portion (41) has a first expansion chamber (B1) formed inside of the connecting portion (41).

10. The scooter type vehicle (1) according to any of claims 1 to 9, wherein
the connecting portion (41) includes:
a second end (41b) connected to the second unit (51), and
the second end (41b) of the connecting portion (41) has a diameter (D4) twice or more as large as a diameter (D2) of the first housing portion (34d).

11. The scooter type vehicle (1) according to any of claims 1 to 10, wherein
the second unit (51) extends rearward from the connecting portion (41), and
a length (J2) of the second unit (51) in a longitudinal direction (X) of the scooter type vehicle (1) is smaller than a length (J1) of the first unit (31) in the longitudinal direction (X) of the scooter type vehicle (1).

12. The scooter type vehicle (1) according to any of claims 1 to 11, wherein
the second unit (51) includes:
a third pipe (53) connected to the connecting portion (41); and
a second catalyst (55) arranged inside of the third pipe (53), and
the second catalyst (55) overlaps the first catalyst (35) in plan view of the scooter type vehicle (1).

13. The scooter type vehicle (1) according to claim 12, wherein
the third pipe (53) has a front end (53a),
the front end (53a) of the third pipe (53) is connected to the connecting portion (41), and
the third pipe (53) extends rearward from the connecting portion (41).

14. The scooter type vehicle (1) according to claim 12 or 13, wherein
the second unit (51) includes:
a casing (57) for housing the third pipe (53),
the casing (57) has:
a second expansion chamber (B2) formed inside of the casing (57), and
the third pipe (53) is opened to the second expansion chamber (B2).

15. The scooter type vehicle (1) according to claim 14, wherein
the casing (57) has a cylindrical shape extending in the longitudinal direction (X) of the scooter type vehicle (1),
the third pipe (53) has:
a second housing portion (54b) configured to house the second catalyst (55),
the casing (57) has a diameter (D7) twice or more as large as a diameter (D5) of the second housing portion (54b), and
the diameter (D7) of the casing (57) is 1.5 times or more as large as a diameter (D3) of the second pipe (37).

## Patentansprüche

1. Motorrollerartiges Fahrzeug (1), umfassend:
einen Lenker (3),
einen Sitz (6), der weiter hinten als der Lenker (3) angeordnet ist,
einen Motor (12),
ein Auspuffrohr (21), das mit dem Motor (12) verbunden ist,
einen Auspufftopf (23), der mit dem Auspuffrohr (21) verbunden ist, und
ein Hinterrad (15),
wobei an dem motorrollerartigen Fahrzeug (1) ein vertiefter Raum (F) ausgebildet ist, der weiter hinten als der Lenker (3) und weiter vorne als der Sitz (6) angeordnet ist und in einer Seitenansicht des motorrollerartigen Fahrzeugs (1) nach unten vertieft ist,
wobei der Auspufftopf (23) entweder an einer Position weiter rechts als das Hinterrad (15) oder an einer Position weiter links als das Hinterrad (15) angeordnet ist,
wobei wenigstens ein Teil des Auspufftopfs (23) mit dem Hinterrad (15) in der Seitenansicht des motorrollerartigen Fahrzeugs (1) überlappt,
wobei der Auspufftopf (23) umfasst:
eine erste Einheit (31), die mit dem Auspufftopf (21) verbunden ist,
einen Verbindungsteil (41), der mit der ersten Einheit (31) verbunden ist, und
eine zweite Einheit (51), die mit dem Verbindungsteil (41) verbunden ist,
wobei die erste Einheit (31) umfasst:
ein erstes Rohr (33), das mit dem Auspuffrohr (21) verbunden ist und sich von dem Auspuffrohr (21) nach hinten erstreckt,
einen ersten Katalysator (35), der in dem ersten Rohr (33) angeordnet ist,
ein zweites Rohr (37), das außerhalb des ersten Rohrs (33) angeordnet ist und sich zu einer Position weiter hinten als das erste Rohr (33) erstreckt, und
ein Deckelglied (39), das an einem hinteren Ende (37b) des zweiten Rohrs (37) angebracht ist, um das hintere Ende (37b) des zweiten Rohrs (37) zu schließen, und von dem ersten Rohr (33) ausgestoßene Abgase in einen Zwischenraum (G), der auswärts von dem ersten Rohr (33) und einwärts von dem zweiten Rohr (37) ausgebildet ist, einzuführen,
wobei das erste Rohr (33) einen ersten Gehäuseteil (34d) aufweist, der konfiguriert ist zum Aufnehmen des ersten Katalysators (35),
**dadurch gekennzeichnet, dass**:
der Verbindungsteil (41) mit einer Außenumfangsfläche (37c) des zweiten Rohrs (37) verbunden ist und mit dem Zwischenraum (G) in Verbindung steht,
das erste Rohr (33) ein hinteres Ende (33b) aufweist, das sich zu dem Inneren des zweiten Rohrs (37) öffnet, und
die Abgase von dem Zwischenraum (G) zu dem Verbindungsteil (41) strömen.

2. Motorrollerartiges Fahrzeug (1) nach Anspruch 1, wobei:
der Verbindungsteil (41) ein erstes Ende (41a) aufweist, das mit der ersten Einheit (31) verbunden ist,
das erste Ende (41a) des Verbindungsteils (41) vollständig einen oberen Teil (37c1) der Außenumfangsfläche (37c) des zweiten Rohrs (37c) kontaktiert, und
sich der Verbindungsteil (41) von dem oberen Teil (37c1) der Außenumfangsfläche (37c) des zweiten Rohrs (37) nach oben erstreckt.

3. Motorrollerartiges Fahrzeug (1) nach Anspruch 1 oder 2, wobei:
sich das erste Ende (41a) des Verbindungsteils (41) von einer Position weiter vorn als einer vorderen Fläche (35a) des ersten Katalysators (35) zu einer Position weiter hinten als die vordere Fläche (35a) des ersten Katalysators (35) erstreckt.

4. Motorrollerartiges Fahrzeug (1) nach einem der Ansprüche 1 bis 3, wobei:
der Verbindungsteil (41) vollständig weiter vorne als das Deckelglied (39) angeordnet ist.

5. Motorrollerartiges Fahrzeug (1) nach einem der Ansprüche 1 bis 4, wobei:
der Verbindungsteil (41) vollständig weiter vorne als eine hintere Fläche (35b) des ersten Katalysators (35) angeordnet ist.

6. Motorrollerartiges Fahrzeug (1) nach einem der Ansprüche 1 bis 5, wobei der Auspufftopf (23) umfasst:
einen ersten Halteteil (82), der an dem Verbindungsteil (41) fixiert ist und konfiguriert ist zum Halten des Verbindungsteils (41).

7. Motorrollerartiges Fahrzeug (1) nach einem der Ansprüche 1 bis 6, wobei:
das erste Rohr (33) weiterhin einen vorderen Teil (34c), der sich von dem ersten Gehäuseteil (34d) nach vorne erstreckt, aufweist, und
der vordere Teil (34c) einen Flusspfad mit einer Größe gleich oder größer als der erste Katalysator (35) enthält.

8. Motorrollerartiges Fahrzeug (1) nach einem der Ansprüche 1 bis 7. wobei:
der Auspufftopf (23) einen stromabwärts angeordneten Sauerstoffsensor (72, 73), der stromabwärts von dem ersten Katalysator (35) angeordnet ist, umfasst, und
der stromabwärts angeordnete Sauerstoffsensor (72, 73) an entweder dem zweiten Rohr (37) oder dem Verbindungsteil (41) befestigt ist.

9. Motorrollerartiges Fahrzeug (1) nach einem der Ansprüche 1 bis 8, wobei:
der Verbindungsteil (41) eine erste Ausdehnungskammer (B1) aufweist, die in dem Verbindungsteil (41) ausgebildet ist.

10. Motorrollerartiges Fahrzeug (1) nach einem der Ansprüche 1 bis 9, wobei:
der Verbindungsteil (41) ein zweites Ende (41b), das mit der zweiten Einheit (51) verbunden ist, umfasst, und
das zweite Ende (41b) des Verbindungsteils (41) einen Durchmesser (D4), der doppelt so groß oder noch größer wie der Durchmesser (D2) des ersten Gehäuseteils (34d) ist, aufweist.

11. Motorrollerartiges Fahrzeug (1) nach einem der Ansprüche 1 bis 10, wobei:
sich die zweite Einheit (51) von dem Verbindungsteil (41) nach hinten erstreckt, und
die Länge (J2) der zweiten Einheit (51) in einer Längsrichtung (X) des motorrollerartigen Fahrzeugs (1) kleiner als die Länge (J1) der ersten Einheit (31) in der Längsrichtung (X) des motorrollerartigen Fahrzeugs (1) ist.

12. Motorrollerartiges Fahrzeug (1) nach einem der Ansprüche 1 bis 11, wobei:
die zweite Einheit (51) umfasst:
ein drittes Rohr (53), das mit dem Verbindungsteil (41) verbunden ist, und
einen zweiten Katalysator (55), der in dem dritten Rohr (53) angeordnet ist, und
der zweite Katalysator (55) den ersten Katalysator (35) in einer Draufsicht des motorrollerartigen Fahrzeugs (1) überlappt.

13. Motorrollerartiges Fahrzeug (1) nach Anspruch 12, wobei:
das dritte Rohr (53) ein vorderes Ende (53a) aufweist,
das vordere Ende (53a) des dritten Rohrs (53) mit dem Verbindungsteil (41) verbunden ist, und
sich das dritte Rohr (53) von dem Verbindungsteil (41) nach hinten erstreckt.

14. Motorrollerartiges Fahrzeug (1) nach Anspruch 12 oder 13, wobei:
die zweite Einheit (51) ein Gehäuse (57) zum Aufnehmen des dritten Rohrs (53) umfasst, und
das Gehäuse (57) eine zweite Ausdehnungskammer (B2), die im Inneren des Gehäuses (57) ausgebildet ist, aufweist und sich das dritte Rohr (53) zu der zweiten Ausdehnungskammer (B2) öffnet.

15. Motorrollerartiges Fahrzeug (1) nach Anspruch 14, wobei:
das Gehäuse (57) eine zylindrische Form, die sich in der Längsrichtung (X) des motorrollerartigen Fahrzeugs (1) erstreckt, aufweist,
das dritte Rohr (53) einen zweiten Gehäuseteil (54b), der für das Aufnehmen des zweiten Katalysators (55) konfiguriert ist, aufweist,
das Gehäuse (57) einen Durchmesser (D7), der doppelt so groß oder noch größer wie der Durchmesser (D5) des zweiten Gehäuseteils (54b) ist, aufweist, und
der Durchmesser (D7) des Gehäuses (57) 1,5 Mal so groß oder noch größer wie der Durchmesser (D2) des zweiten Rohrs (37) ist.

## Revendications

1. Véhicule de type scooter (1), comprenant :
un guidon (3) ;
un siège (6) situé plus en arrière que le guidon (3) ;
un moteur (12) ;
un tuyau d'échappement (21) relié au moteur (12) ;
un silencieux (23) relié au tuyau d'échappement (21) ; et
une roue arrière (15), dans lequel
le véhicule de type scooter (1) forme un espace en retrait (F) situé plus en arrière que le guidon (3) et plus en avant que le siège (6), et en retrait vers le bas en vue latérale du véhicule de type scooter (1),
le silencieux (23) est situé soit dans une position plus à droite que la roue arrière (15), soit dans une position plus à gauche que la roue arrière (15),
au moins une partie du silencieux (23) recouvre la roue arrière (15) dans la vue latérale du véhicule de type scooter (1),
le silencieux (23) inclut :
une première unité (31) reliée au tuyau d'échappement (21) ;
une partie de connexion (41) reliée à la première unité (31) ; et
une deuxième unité (51) reliée à la partie de connexion (41),
la première unité (31) inclut :
un premier tuyau (33) relié au tuyau d'échappement (21) et s'étendant vers l'arrière du tuyau d'échappement (21) ;
un premier catalyseur (35) disposé à l'intérieur du premier tuyau (33) ;
un deuxième tuyau (37) disposé à l'extérieur du premier tuyau (33) et s'étendant jusqu'à une position plus en arrière que le premier tuyau (33) ; et
un élément de couvercle (39) fixé à l'extrémité arrière (37b) du deuxième tuyau (37) pour fermer l'extrémité arrière (37b) du deuxième tuyau (37), et introduisant les gaz d'échappement, évacués du premier tuyau (33), dans un espace (G) formé à l'extérieur du premier tuyau (33) et à l'intérieur du deuxième tuyau (37),
le premier tuyau (33) comporte une première partie de logement (34d) configurée pour loger le premier catalyseur (35) ;
**caractérisé en ce que** :
la partie de connexion (41) est reliée à une face circonférentielle extérieure (37c) du deuxième tuyau (37) et est en communication avec l'espace (G) ;
le premier tuyau (33) a une extrémité arrière (33b) ouverte sur l'intérieur du deuxième tuyau 37, et
les gaz d'échappement s'écoulent de l'espace (G) vers la partie de connexion (41).

2. Véhicule de type scooter (1) selon la revendication 1, dans lequel
la partie de connexion (41) a une première extrémité (41a) connectée à la première unité (31), la première extrémité (41a) de la partie de connexion (41) est entièrement en contact avec une partie supérieure (37c1) de la face circonférentielle extérieure (37c) du deuxième tuyau (37c), et
la partie de connexion (41) s'étend vers le haut à partir de la partie supérieure (37c1) de la face circonférentielle extérieure (37c) du deuxième tuyau (37).

3. Véhicule de type scooter (1) selon la revendication 1 ou 2, dans lequel
la première extrémité (41a) de la partie de connexion (41) s'étend d'une position plus en avant qu'une face avant (35a) du premier catalyseur (35) à une position plus en arrière que la face avant (35a) du premier catalyseur (35).

4. Véhicule de type scooter (1) selon l'une quelconque des revendications 1 à 3, dans lequel
la partie de connexion (41) est entièrement située plus en avant que l'élément de couvercle (39).

5. Véhicule de type scooter (1) selon l'une quelconque des revendications 1 à 4, dans lequel
la partie de connexion (41) est entièrement située plus en avant qu'une face arrière (35b) du premier catalyseur (35).

6. Véhicule de type scooter (1) selon l'une quelconque des revendications 1 à 5, dans lequel le silencieux (23) inclut :
un premier étai (82) fixé à la partie de connexion (41) et configuré pour soutenir la partie de connexion (41).

7. Véhicule de type scooter (1) selon l'une quelconque des revendications 1 à 6, dans lequel
le premier tuyau (33) comporte en outre une partie avant (34c) s'étendant vers l'avant à partir de la première partie de logement (34d), et
la partie avant (34c) inclut une voie d'écoulement dont la taille est égale ou supérieure à celle du premier catalyseur (35).

8. Véhicule de type scooter (1) selon l'une quelconque des revendications 1 à 7, dans lequel
le silencieux (23) inclut un capteur d'oxygène en aval (72, 73) situé en aval du premier catalyseur (35), et
le capteur d'oxygène en aval (72, 73) est fixé soit au deuxième tuyau (37), soit à la partie de connexion (41).

9. Véhicule de type scooter (1) selon l'une quelconque des revendications 1 à 8, dans lequel
la partie de connexion (41) comporte une première chambre d'expansion (B1) formée à l'intérieur de la partie de connexion (41).

10. Véhicule de type scooter (1) selon l'une quelconque des revendications 1 à 9, dans lequel la partie de connexion (41) inclut :
une deuxième extrémité (41b) reliée à la deuxième unité (51), et la deuxième extrémité (41b) de la partie de connexion (41) a un diamètre (D4) deux fois plus grand ou plus grand qu'un diamètre (D2) de la première partie de logement (34d).

11. Véhicule de type scooter (1) selon l'une quelconque des revendications 1 à 10, dans lequel
la deuxième unité (51) s'étend vers l'arrière à partir de la partie de connexion (41), et
une longueur (J2) de la deuxième unité (51) dans une direction longitudinale (X) du véhicule de type scooter (1) est inférieure à une longueur (J1) de la première unité (31) dans la direction longitudinale (X) du véhicule de type scooter (1).

12. Véhicule de type scooter (1) selon l'une quelconque des revendications 1 à 11, dans lequel la deuxième unité (51) inclut :
un troisième tuyau (53) relié à la partie de connexion (41) ; et un deuxième catalyseur (55) disposé à l'intérieur du troisième tuyau (53), et le deuxième catalyseur (55) recouvre le premier catalyseur (35) en vue de dessus du véhicule de type scooter (1).

13. Véhicule de type scooter (1) selon la revendication 12, dans lequel le troisième tuyau (53) a une extrémité avant (53a),
l'extrémité avant (53a) du troisième tuyau (53) est reliée à la partie de connexion (41), et
le troisième tuyau (53) s'étend vers l'arrière de la partie de connexion (41).

14. Véhicule de type scooter (1) selon la revendication 12 ou 13, dans lequel la deuxième unité (51) inclut :
un boîtier (57) pour loger le troisième tuyau (53),
le boîtier (57) ayant :
une deuxième chambre d'expansion (B2) formée à l'intérieur de le boîtier (57), et le troisième tuyau (53) est ouvert à la deuxième chambre d'expansion (B2).

15. Véhicule de type scooter (1) selon la revendication 14, dans lequel
le boîtier (57) a une forme cylindrique s'étendant dans la direction longitudinale (X) du véhicule de type scooter (1),
le troisième tuyau (53) a :
une deuxième partie de logement (54b) configurée pour loger le deuxième catalyseur (55),
le boîtier (57) a un diamètre (D7) deux fois plus grand ou plus grand que le diamètre (D5) de la deuxième partie de logement (54b), et
le diamètre (D7) de le boîtier (57) est 1,5 fois ou plus grand que le diamètre (D3) du deuxième tuyau (37).
